(19) **Europäisches Patentamt**
**European Patent Office**
**Office européen des brevets**

(11) **EP 4 401 486 A1**

(12) **EUROPEAN PATENT APPLICATION**
published in accordance with Art. 153(4) EPC

(43) Date of publication:
**17.07.2024 Bulletin 2024/29**

(21) Application number: **22870358.3**

(22) Date of filing: **16.09.2022**

(51) International Patent Classification (IPC):
$H04W\ 72/04^{(2023.01)}$    $H04W\ 72/02^{(2009.01)}$
$H04W\ 72/12^{(2023.01)}$    $H04L\ 1/18^{(2023.01)}$
$H04W\ 4/40^{(2018.01)}$     $H04W\ 92/18^{(2009.01)}$

(52) Cooperative Patent Classification (CPC):
**H04L 1/18; H04W 4/40; H04W 72/02; H04W 72/04;**
**H04W 72/12; H04W 92/18**

(86) International application number:
**PCT/KR2022/013914**

(87) International publication number:
**WO 2023/043275 (23.03.2023 Gazette 2023/12)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: 17.09.2021  KR 20210125139
          27.09.2021  KR 20210127405
          03.11.2021  KR 20210149947
          16.11.2021  KR 20210157761
          10.12.2021  KR 20210176853
          28.12.2021  KR 20210190314

(71) Applicant: **LG Electronics Inc.**
**Yeongdeungpo-gu**
**Seoul 07336 (KR)**

(72) Inventors:
• **HWANG, Daesung**
  **Seoul 06772 (KR)**
• **LEE, Seungmin**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND APPARATUS FOR TRANSMITTING AND RECEIVING INTER-UE COORDINATION INFORMATION IN WIRELESS COMMUNICATION SYSTEM**

(57)    A method of a first user equipment (UE) for transmitting inter-UE coordination information in a wireless communication system comprises receiving a request for the inter-UE coordination information from a second UE and transmitting the inter-UE coordination information to the second UE. The request is received based on a first ID, and the inter-UE coordination information is transmitted based on a second ID. The first ID includes a first SOURCE ID and a first DESTINATION ID, and the second ID includes a second SOURCE ID and a second DESTINATION ID. At least one of the first SOURCE ID, the first DESTINATION ID, the second SOURCE ID, or the second DESTINATION ID is set to a pre-defined ID.

【FIG. 13】

```
                    ┌─────────┐
                    │  Start  │
                    └─────────┘
                         │
                         ▼
┌────────────────────────────────────────────────────────┐
│ Receive request for inter-UE coordination information    │───S1310
└────────────────────────────────────────────────────────┘
                         │
                         ▼
┌────────────────────────────────────────────────────────┐
│ Transmit inter-UE coordination information               │───S1320
└────────────────────────────────────────────────────────┘
                         │
                         ▼
                    ┌─────────┐
                    │   End   │
                    └─────────┘
```

EP 4 401 486 A1

**Description**

[TECHNICAL FIELD]

The present disclosure relates to a method of transmitting and receiving inter-UE coordination information in a wireless communication system and a device therefor.

[BACKGROUND]

A wireless communication system is a multiple access system that supports communication of multiple users by sharing available system resources (e.g., a bandwidth, transmission power, etc.) among them. Examples of multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi-Carrier Frequency Division Multiple Access (MC-FDMA) system.

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic.

Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PCS interface and/or Uu interface.

As a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

Regarding an inter-UE coordination mechanism, two schemes may be considered. In scheme 1, a UE-A may provide a UE-B with a set of resources that can be used for a resource (re)selection procedure of the UE-B. In scheme 2, a UE-A may provide a UE-B with resource collision related information for resources indicated by sidelink control information (SCI) of the UE-B. The UE-B may avoid a resource collision by reselecting some of the resources indicated by the SCI of the UE-B.

A resource set which may be used for a resource (re)selection procedure of the UE-B in relation to the scheme 1 may include preferred and/or non-preferred resources. The UE-A may determine the preferred and/or non-preferred resources by using a sensing result thereof.

Source IDs/Destination IDs related to inter-UE coordination information may be necessary to determine whether to use the inter-UE coordination information. For example, it may be assumed that the non-preferred resource is determined as a resource belonging to a slot, in which the UE-A cannot perform SL reception, due to a half duplex operation. In this case, the non-preferred resource is used when the UE-B receiving the inter-UE coordination information selects a resource for transmitting data (e.g., PSSCH) using the UE-A as a destination. That is, when the UE-B transmits data (e.g., PSSCH) using another UE not the UE-A as the destination, the UE-B may not use the non-preferred resource for the resource selection.

[DISCLOSURE]

[TECHNICAL PROBLEM]

When inter-UE coordination information is always used to select resources for transmission of a PSSCH of a UE-B regardless of a destination related to the PSSCH, the following problem may occur. Inter-UE coordination information with low accuracy that does not contribute to reliability improvement of sidelink communication may be used to select the resources of the UE-B.

An object of the present disclosure is to provide a method for solving the above-described problem.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TECHNICAL SOLUTION]

A method of a first user equipment (UE) for transmitting inter-UE coordination information in a wireless communication system according to an embodiment of the present disclosure comprises receiving, from a second UE, a request for the inter-UE coordination information and transmitting the inter-UE coordination information to the second UE.

The request is received based on a first ID, and the inter-UE coordination information is transmitted based on a second ID. The first ID includes a first SOURCE ID and a first DESTINATION ID, and the second ID includes a second SOURCE ID and a second DESTINATION ID.

At least one of the first SOURCE ID, the first DESTINATION ID, the second SOURCE ID, or the second DESTINATION ID is set to a pre-defined ID.

Based on a cast type related to a transmission of the request being a unicast, the first SOURCE ID and the first DESTINATION ID may be set to a third SOURCE ID and a third DESTINATION ID.

The third SOURCE ID and the third DESTINATION ID may be determined among pre-defined SOURCE IDs and DESTINATION IDs for the transmission of the request.

The second SOURCE ID may be set to the first DESTINATION ID, and the second DESTINATION ID may be set to the first SOURCE ID.

Based on a cast type related to a transmission of the request being a groupcast or a broadcast, the second DESTINATION ID may be set to the first DESTINATION ID.

Based on a transmission of the inter-UE coordination information being triggered by other condition than the request, the second SOURCE ID and the second DESTINATION ID may be set to a fourth SOURCE ID and a fourth DESTINATION ID.

The fourth SOURCE ID and the fourth DESTINATION ID may be determined among pre-defined SOURCE IDs and DESTINATION IDs for the transmission of the inter-UE coordination information.

Based on the request being multiplexed together with data and received, the first DESTINATION ID may be configured to be the same as a DESTINATION ID related to a transmission of the data.

Based on the inter-UE coordination information being multiplexed together with data and transmitted, the second DESTINATION ID may be configured to be the same as a DESTINATION ID related to a transmission of the data.

A first user equipment (UE) transmitting inter-UE coordination information in a wireless communication system according to another embodiment of the present disclosure comprises one or more transceivers, one or more processors configured to control the one or more transceivers, and one or more memories operably connected to the one or more processors.

The one or more memories are configured to store instructions performing operations based on being executed by the one or more processors.

The operations comprise receiving, from a second UE, a request for the inter-UE coordination information and transmitting the inter-UE coordination information to the second UE.

The request is received based on a first ID, and the inter-UE coordination information is transmitted based on a second ID. The first ID includes a first SOURCE ID and a first DESTINATION ID, and the second ID includes a second SOURCE ID and a second DESTINATION ID.

At least one of the first SOURCE ID, the first DESTINATION ID, the second SOURCE ID, or the second DESTINATION ID is set to a pre-defined ID.

A device controlling a first user equipment (UE) to transmit inter-UE coordination information in a wireless communication system according to another embodiment of the present disclosure comprises one or more processors and one or more memories operably connected to the one or more processors.

The one or more memories are configured to store instructions performing operations based on being executed by the one or more processors.

The operations comprise receiving, from a second UE, a request for the inter-UE coordination information and transmitting the inter-UE coordination information to the second UE.

The request is received based on a first ID, and the inter-UE coordination information is transmitted based on a second ID. The first ID includes a first SOURCE ID and a first DESTINATION ID, and the second ID includes a second SOURCE ID and a second DESTINATION ID.

At least one of the first SOURCE ID, the first DESTINATION ID, the second SOURCE ID, or the second DESTINATION ID is set to a pre-defined ID.

One or more non-transitory computer readable mediums according to another embodiment of the present disclosure store one or more instructions.

The one or more instructions perform operations based on being executed by one or more processors.

The operations comprise receiving, from a second user equipment (UE), a request for inter-UE coordination information and transmitting the inter-UE coordination information to the second UE.

The request is received based on a first ID, and the inter-UE coordination information is transmitted based on a second ID. The first ID includes a first SOURCE ID and a first DESTINATION ID, and the second ID includes a second SOURCE ID and a second DESTINATION ID.

At least one of the first SOURCE ID, the first DESTINATION ID, the second SOURCE ID, or the second DESTINATION ID is set to a pre-defined ID.

A method of a second user equipment (UE) for receiving inter-UE coordination information in a wireless communication system according to another embodiment of the present disclosure comprises transmitting, to a first UE, a request for the inter-UE coordination information and receiving the inter-UE coordination information from the first UE.

The request is transmitted based on a first ID, and the inter-UE coordination information is received based on a second ID. The first ID includes a first SOURCE ID and a first DESTINATION ID, and the second ID includes a second SOURCE ID and a second DESTINATION ID.

At least one of the first SOURCE ID, the first DESTINATION ID, the second SOURCE ID, or the second DESTINATION ID is set to a pre-defined ID.

A second user equipment (UE) receiving inter-UE coordination information in a wireless communication system according to another embodiment of the present disclosure comprises one or more transceivers, one or more processors configured to control the one or more transceivers, and one or more memories operably connected to the one or more processors.

The one or more memories are configured to store instructions performing operations based on being executed by the one or more processors.

The operations comprise transmitting, to a first UE, a request for the inter-UE coordination information and receiving the inter-UE coordination information from the first UE.

The request is transmitted based on a first ID, and the inter-UE coordination information is received based on a second ID. The first ID includes a first SOURCE ID and a first DESTINATION ID, and the second ID includes a second SOURCE ID and a second DESTINATION ID.

At least one of the first SOURCE ID, the first DESTINATION ID, the second SOURCE ID, or the second DESTINATION ID is set to a pre-defined ID.

[ADVANTAGEOUS EFFECTS]

According to embodiments of the present disclosure, at least one of a first SOURCE ID and a first DESTINATION ID related to a request for inter-UE coordination information and a second SOURCE ID and a second DESTINATION ID related to the inter-UE coordination information is set to a pre-defined ID. That is, based on the request for the inter-UE coordination information and/or the inter-UE coordination information transmitted based on pre-defined ID, whether to use the inter-UE coordination information can be clearly determined. Further, inter-UE coordination information with high accuracy can be used for resource selection of a UE-B.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[BRIEF DESCRIPTION OF THE DRAWINGS]

The accompanying drawings, which are included to provide a further understanding of the present disclosure and constitute a part of the detailed description, illustrate embodiments of the present disclosure and together with the description serve to explain the principle of the present disclosure.

FIG. 1 illustrates a structure of an NR system, based on an embodiment of the present disclosure.
FIG. 2 illustrates a structure of a radio frame of an NR, based on an embodiment of the present disclosure.
FIG. 3 illustrates a structure of a slot of an NR frame, based on an embodiment of the present disclosure.
FIG. 4 illustrates a UE performing V2X or SL communication based on an embodiment of the present disclosure.
FIG. 5 illustrates a resource unit for V2X or SL communication based on an embodiment of the present disclosure.
FIG. 6 illustrates a procedure of performing V2X or SL communication by a UE based on a transmission mode, based on an embodiment of the present disclosure.
FIG. 7 illustrates three cast types based on an embodiment of the present disclosure.
FIG. 8 illustrates a plurality of BWPs based on an embodiment of the present disclosure.
FIG. 9 illustrates a BWP based on an embodiment of the present disclosure.
FIG. 10 illustrates a resource unit for CBR measurement based on an embodiment of the present disclosure.
FIG. 11 illustrates a resource pool related to CBR measurement.
FIG. 12 illustrates a procedure in which a UE-A transmits assistance information to a UE-B based on an embodiment of the present disclosure.

FIG. 13 is a flow chart illustrating a method for a first UE to transmit Inter-UE coordination information in a wireless communication system according to an embodiment of the present disclosure.

FIG. 14 is a flow chart illustrating a method for a second UE to receive Inter-UE coordination information in a wireless communication system according to another embodiment of the present disclosure.

FIG. 15 illustrates a communication system 1 based on an embodiment of the present disclosure.

FIG. 16 illustrates wireless devices based on an embodiment of the present disclosure.

FIG. 17 illustrates a signal process circuit for a transmission signal based on an embodiment of the present disclosure.

FIG. 18 illustrates another example of a wireless device based on an embodiment of the present disclosure.

FIG. 19 illustrates a hand-held device based on an embodiment of the present disclosure

FIG. 20 illustrates a vehicle or an autonomous vehicle based on an embodiment of the present disclosure.

[DETAILED DESCRIPTION]

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

For terms and techniques not specifically described among terms and techniques used in the present disclosure, reference may be made to a wireless communication standard document published before the present disclosure is filed. For example, the following document may be referred to.

| 3GPP LTE | 3GPP NR (e.g. 5G) |
|---|---|
| - 3GPP TS 36.211: Physical channels and modulation | - 3GPP TS 38.211: Physical channels and modulation |

| - 3GPP TS 36.212: Multiplexing and channel coding | - 3GPP TS 38.212: Multiplexing and channel coding |
|---|---|
| - 3GPP TS 36.213: Physical layer procedures | - 3GPP TS 38.213: Physical layer procedures for control |
| - 3GPP TS 36.214: Physical layer; Measurements | - 3GPP TS 38.214: Physical layer procedures for data |
| - 3GPP TS 36.300: Overall description | |
| - 3GPP TS 36.304: User Equipment (UE) procedures in idle mode | - 3GPP TS 38.215: Physical layer measurements |
| - 3GPP TS 36.314: Layer 2 - Measurements | - 3GPP TS 38.300: Overall description |
| - 3GPP TS 36.321: Medium Access Control (MAC) protocol | - 3GPP TS 38.304: User Equipment (UE) procedures in idle mode and in RRC inactive state |
| - 3GPP TS 36.322: Radio Link Control (RLC) protocol | - 3GPP TS 38.321: Medium Access Control (MAC) protocol |
| - 3GPP TS 36.323: Packet Data Convergence Protocol (PDCP) | - 3GPP TS 38.322: Radio Link Control (RLC) protocol |
| - 3GPP TS 36.331: Radio Resource Control (RRC) protocol | - 3GPP TS 38.323: Packet Data Convergence Protocol (PDCP) |
| | - 3GPP TS 38.331: Radio Resource Control (RRC) protocol |
| | - 3GPP TS 37.324: Service Data Adaptation Protocol (SDAP) |
| | - 3GPP TS 37.340: Multi-connectivity; Overall description |

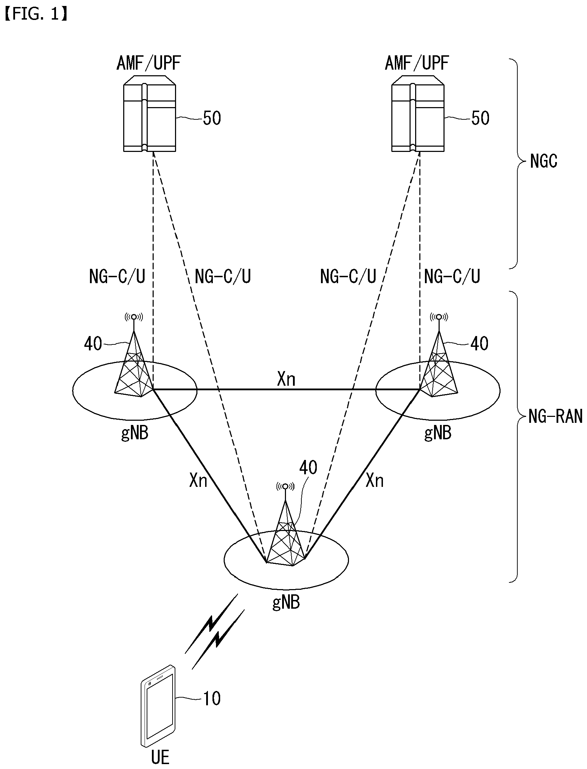

FIG. 1 illustrates a structure of an NR system, based on an embodiment of the present disclosure.

Referring to FIG. 1, a Next Generation - Radio Access Network (NG-RAN) may include a next generation-Node B (gNB) and/or eNB providing a user plane and control plane protocol termination to a user. FIG. 1 illustrates a case where the NG-RAN includes only the gNB. The gNB and the eNB are connected to one another via Xn interface. The gNB and the eNB are connected to one another via 5th Generation (5G) Core Network (5GC) and NG interface. More specifically, the gNB and the eNB are connected to an access and mobility management function (AMF) via NG-C interface, and the gNB and the eNB are connected to a user plane function (UPF) via NG-U interface.

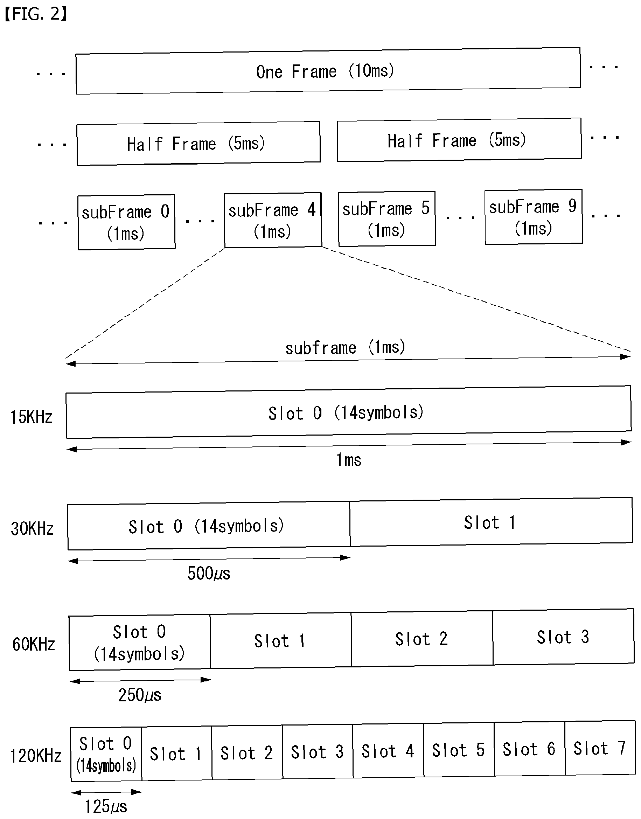

FIG. 2 illustrates a structure of a radio frame of an NR, based on an embodiment of the present disclosure.

Referring to FIG. 2, in the NR, a radio frame may be used for performing uplink and downlink transmission. A radio frame has a length of 10 ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols based on a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

[Table 2]

| SCS (15*2$^u$) | N$^{slot}_{symb}$ | N$^{frame,u}_{slot}$ | N$^{subframe,u}_{slot}$ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15 kHz, a wide area of the conventional cellular bands may be supported, and, in case an SCS is 30 kHz/60 kHz a dense-urban, lower latency, wider carrier bandwidth may be supported. In case the SCS is 60 kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range Designation | Corresponding Frequency Range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410 MHz to 7125 MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range Designation | Corresponding Frequency Range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

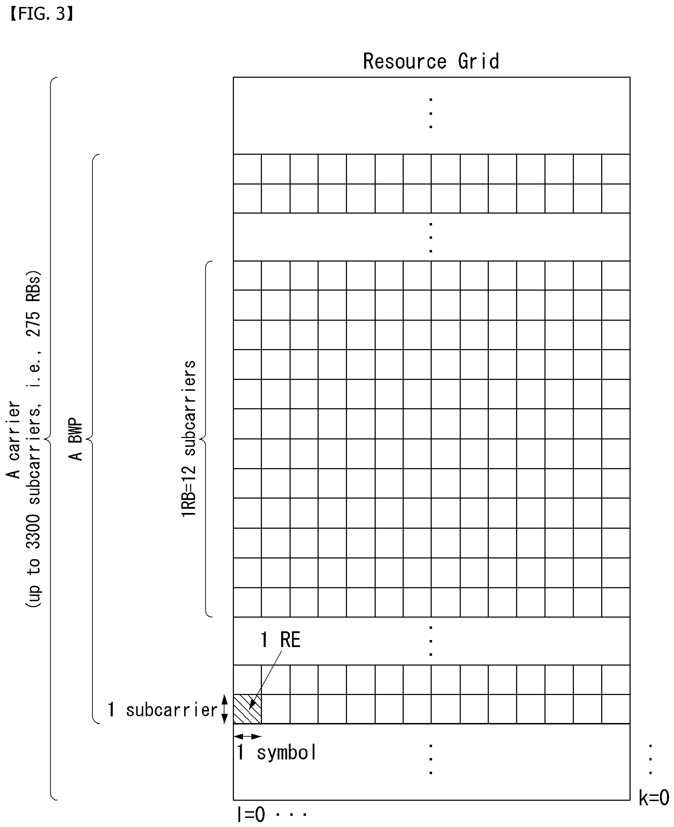

FIG. 3 illustrates a structure of a slot of an NR frame, based on an embodiment of the present disclosure.

Referring to FIG. 3, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

A radio interface between a UE and another UE or a radio interface between the UE and a network may consist of an L1 layer, an L2 layer, and an L3 layer. In various embodiments of the present disclosure, the L1 layer may imply a physical layer. In addition, for example, the L2 layer may imply at least one of a MAC layer, an RLC layer, a PDCP layer, and an SDAP layer. In addition, for example, the L3 layer may imply an RRC layer.

Sidelink synchronization signal (SLSS) and synchronization information

The SLSS may be an SL-specific sequence and include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and/or for synchronization acquisition. For example, the UE may use the S-PSS and the S-SSS for acquisition of fine synchronization and/or for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit CRC.

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

A plurality of numerologies having different SCSs and/or CP lengths may be supported in an NR SL system. In this case, a length of a time resource used by a transmitting UE to transmit the S-SSB may be decreased along with an increase in the SCS. Accordingly, coverage of the S-SSB may be decreased. Therefore, in order to ensure the coverage of the S-SSB, the transmitting UE may transmit one or more S-SSBs to a receiving UE within one S-SSB transmission period based on the SCS. For example, the number of S-SSBs transmitted by the transmitting UE to the receiving UE within one S-SSB transmission period may be pre-configured or configured to the transmitting UE. For example, an S-SSB transmission period may be 160 ms. For example, the S-SSB transmission period of 160 ms may be supported for all SCSs.

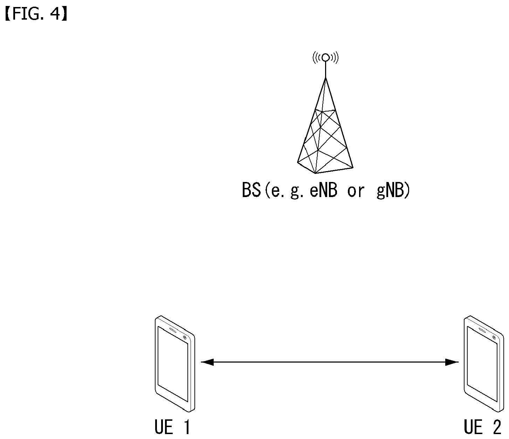

FIG. 4 illustrates a UE performing V2X or SL communication based on an embodiment of the present disclosure.

Referring to FIG. 4, in V2X or SL communication, the term 'UE' may generally imply a UE of a user. However, if a network equipment such as a BS transmits/receives a signal based on a communication scheme between UEs, the BS may also be regarded as a sort of the UE. For example, a UE 1 may be a first device 100, and a UE 2 may be a second device 200.

For example, the UE 1 may select a resource unit corresponding to a specific resource in a resource pool which implies a set of series of resources. In addition, the UE 1 may transmit an SL signal by using the resource unit. For example, the UE 2 which is a receiving UE may be allocated with a resource pool in which the UE 1 is capable of transmitting a signal, and may detect a signal of the UE 1 in the resource pool.

Herein, if the UE 1 is within a coverage of the BS, the BS may inform the UE 1 of the resource pool. Otherwise, if the UE 1 is out of the coverage of the BS, another UE may inform the UE 1 of the resource pool, or the UE 1 may use a pre-configured resource pool.

In general, the resource pool may be configured based on a plurality of resource units, and each UE may select at least one resource unit for SL signal transmission.

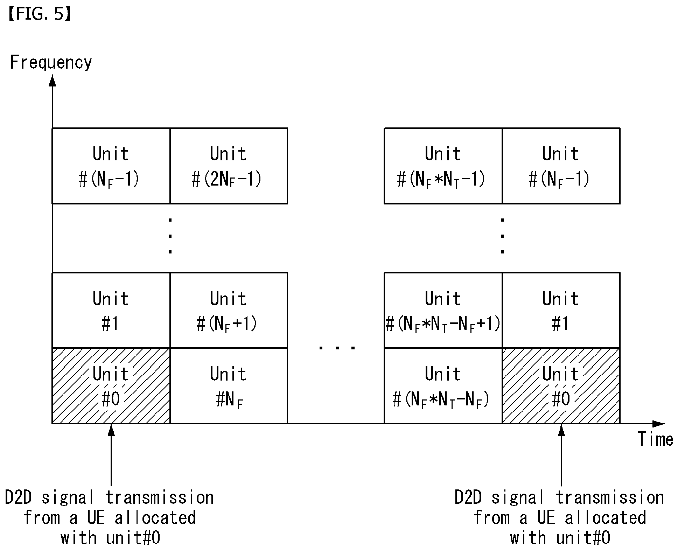

FIG. 5 illustrates a resource unit for V2X or SL communication based on an embodiment of the present disclosure.

Referring to FIG. 5, all frequency resources of a resource pool may be divided into NF resources, and all time resources of the resource pool may be divided into NT resources. Therefore, NF * NT resource units may be defined in the resource pool. FIG. 5 may show an example of a case where a corresponding resource pool is repeated with a period of NT subframes.

As shown in FIG. 5, one resource unit (e.g., Unit #0) may be periodically repeated. Alternatively, to obtain a diversity effect in a time or frequency domain, an index of a physical resource unit to which one logical resource unit is mapped may change to a pre-determined pattern over time. In a structure of such a resource unit, the resource pool may imply a set of resource units that can be used in transmission by a UE intending to transmit an SL signal.

The resource pool may be subdivided into several types. For example, based on content of an SL signal transmitted in each resource pool, the resource pool may be classified as follows.

(1) Scheduling assignment (SA) may be a signal including information related to a location of a resource used for transmission of an SL data channel by a transmitting UE, a modulation and coding scheme (MCS) or multiple input multiple output (MIMO) transmission scheme required for demodulation of other data channels, timing advance (TA), or the like. The SA can be transmitted by being multiplexed together with SL data on the same resource unit. In this case, an SA resource pool may imply a resource pool in which SA is transmitted by being multiplexed with SL data. The SA may also be referred to as an SL control channel.

(2) An SL data channel (physical sidelink shared channel (PSSCH)) may be a resource pool used by the transmitting UE to transmit user data. If SA is transmitted by being multiplexed together with SL data on the same resource unit, only an SL data channel of a type except for SA information may be transmitted in the resource pool for the SL data channel. In other words, resource elements (REs) used to transmit SA information on an individual resource unit in the SA resource pool may be used to transmit SL data still in the resource pool of the SL data channel. For example, the transmitting UE may transmit the PSSCH by mapping it to consecutive PRBs.

(3) A discovery channel may be a resource pool for transmitting, by the transmitting UE, information related to an ID thereof, or the like. Accordingly, the transmitting UE may allow an adjacent UE to discover the transmitting UE itself.

Even if the aforementioned SL signals have the same content, different resource pools may be used based on a transmission/reception attribute of the SL signals. For example, even the same SL data channel or discovery message may be classified again into different resource pools based on a scheme of determining SL signal transmission timing (e.g., whether it is transmitted at a reception time of a synchronization reference signal or transmitted by applying a specific timing advance at the reception time), a resource allocation scheme (e.g., whether a BS designates a transmission resource of an individual signal to an individual transmitting UE or whether the individual transmitting UE autonomously selects an individual signal transmission resource in a resource pool), a signal format (e.g., the number of symbols occupied by each SL signal or the number of subframes used in transmission of one SL signal), signal strength from the BS, transmit power strength of an SL UE, or the like.

Resource allocation in SL

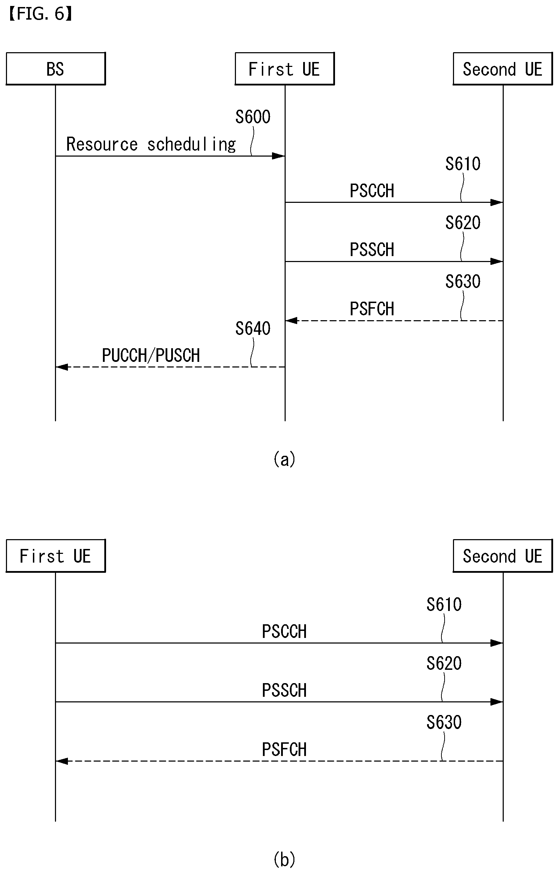

FIG. 6 illustrates a procedure of performing V2X or SL communication by a UE based on a transmission mode, based on an embodiment of the present disclosure.

The embodiment of FIG. 6 may be combined with various embodiments of the present disclosure. In various embodiments of the present disclosure, the transmission mode may be referred to as a mode or a resource allocation mode. Hereinafter, for convenience of explanation, in LTE, the transmission mode may be referred to as an LTE transmission mode. In NR, the transmission mode may be referred to as an NR resource allocation mode.

For example, (a) of FIG. 6 illustrates a UE operation related to an LTE transmission mode 1 or an LTE transmission mode 3. Alternatively, for example, (a) of FIG. 6 illustrates a UE operation related to an NR resource allocation mode 1. For example, the LTE transmission mode 1 may be applied to general SL communication, and the LTE transmission mode 3 may be applied to V2X communication.

For example, (b) of FIG. 6 illustrates a UE operation related to an LTE transmission mode 2 or an LTE transmission mode 4. Alternatively, for example, (b) of FIG. 6 illustrates a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1. Table 5 shows an example of a DCI for SL scheduling.

[Table 5]

| 3GPP TS 38.212 |
|---|
| 7.3.1.4.1 Format 3_0<br>DCI format 3_0 is used for scheduling of NR PSCCH and NR PSSCH in one cell.<br>The following information is transmitted by means of the DCI format 3_0 with CRC scrambled by SL-RNTI or SL-CS-RNTI:<br><br>- Resource pool index - $\lceil \log_2 I \rceil$ bits, where *I* is the number of resource pools for transmission configured by the higher layer parameter *sl-TxPoolScheduling.*<br>- Time gap - 3 bits determined by higher layer parameter *sl-DCI-ToSL-Trans,* as defined in clause 8.1.2.1 of [6, TS 38.214]<br>- HARQ process number - 4 bits as defined in clause 16.4 of [5, TS 38.213]<br>- New data indicator - 1 bit as defined in clause 16.4 of [5, TS 38.213]<br><br>- Lowest index of the subchannel allocation to the initial transmission - $\lceil \log_2 (N_{\text{subChannel}}^{\text{SL}}) \rceil$ bits as defined in clause 8.1.2.2 of [6, TS 38.214]<br>- SCI format 1-A fields according to clause 8.3.1.1:<br>- Frequency resource assignment.<br>- Time resource assignment.<br><br>- PSFCH-to-HARQ feedback timing indicator - $\lceil \log_2 N_{\text{fb\_timing}} \rceil$ bits, where $N_{\text{fb\_timing}}$ is the number of entries in the higher layer parameter *sl-PSFCH-ToPUCCH,* as defined in clause 16.5 of [5, TS 38.213]<br>- PUCCH resource indicator - 3 bits as defined in clause 16.5 of [5, TS 38.213].<br>- Configuration index - 0 bit if the UE is not configured to monitor DCI format 3_0 with CRC scrambled by SL-CS-RNTI; otherwise 3 bits as defined in clause 8.1.2 of [6, TS 38.214]. If the UE is configured to monitor DCI format 3_0 with CRC scrambled by SL-CS-RNTI, this field is reserved for DCI format 3_0 with CRC scrambled by SL-RNTI.<br>- Counter sidelink assignment index - 2 bits<br>- 2 bits as defined in clause 16.5.2 of [5, TS 38.213] if the UE is configured with *pdsch-HARQ-ACK-Codebook = dynamic*<br>- 2 bits as defined in clause 16.5.1 of [5, TS 38.213] if the UE is configured with *pdsch-HARQ-ACK-Codebook = semi-static*<br>- Padding bits, if required<br>7.3.1.4.2 Format 3_1<br>DCI format 3_1 is used for scheduling of LTE PSCCH and LTE PSSCH in one cell.<br>The following information is transmitted by means of the DCI format 3_1 with CRC scrambled by SL-L-CS-RNTI:<br>- Timing offset - 3 bits determined by higher layer parameter *sl-TimeOffsetEUTRA,* as defined in clause 16.6 of [5, TS 38.213]<br>- Carrier indicator -3 bits as defined in 5.3.3.1.9A of [11, TS 36.212].<br><br>- Lowest index of the subchannel allocation to the initial transmission - $\lceil \log_2 (N_{\text{subchannel}}^{\text{SL}}) \rceil$ bits as defined in 5.3.3.1.9A of [11, TS 36.212].<br>- Frequency resource location of initial transmission and retransmission, as defined in 5.3.3.1.9A of [11, TS 36.212]<br>- Time gap between initial transmission and retransmission, as defined in 5.3.3.1.9A of [11, TS 36.212]<br>- SL index - 2 bits as defined in 5.3.3.1.9A of [11, TS 36.212]<br>- SL SPS configuration index - 3 bits as defined in clause 5.3.3.1.9A of [11, TS 36.212].<br>- Activation/release indication - 1 bit as defined in clause 5.3.3.1.9A of [11, TS 36.212]. |

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B. Table 6 shows an example of a 1st-stage SCI format.

【Table 6】

| 3GPP TS 38.212 |
| --- |
| 8.3.1.1  SCI format 1-A<br><br>SCI format 1-A is used for the scheduling of PSSCH and 2nd-stage-SCI on PSSCH<br><br>The following information is transmitted by means of the SCI format 1-A:<br><br>-     Priority – 3 bits as specified in clause 5.4.3.3 of [12, TS 23.287] and clause 5.22.1.3.1 of [8, TS 38.321].<br><br>-     Frequency resource assignment – $\left\lceil \log_2 ( \frac{N_{\text{subChannel}}^{\text{SL}} ( N_{\text{subChannel}}^{\text{SL}} + 1 )}{2} ) \right\rceil$ bits when the value of the higher layer parameter *sl-MaxNumPerReserve* is configured to 2; otherwise $\left\lceil \log_2 ( \frac{N_{\text{subChannel}}^{\text{SL}} ( N_{\text{subChannel}}^{\text{SL}} + 1 )( 2 N_{\text{subChannel}}^{\text{SL}} + 1 )}{6} ) \right\rceil$ bits when the value of the higher layer parameter *sl-MaxNumPerReserve* is configured to 3, as defined in clause 8.1.2.2 of [6, TS 38.214].<br><br>-     Time resource assignment – 5 bits when the value of the higher layer parameter *sl-MaxNumPerReserve* is configured to 2; otherwise 9 bits when the value of the higher layer parameter *sl-MaxNumPerReserve* is configured to 3, as defined in clause 8.1.2.1 of [6, TS 38.214].<br><br>-     Resource reservation period – $\lceil \log_2 N_{\text{rsv\_period}} \rceil$ bits as defined in clause 8.1.4 of [6, TS 38.214], where $N_{\text{rsv\_period}}$ is the number of entries in the higher layer parameter *sl-ResourceReservePeriodList*, if higher layer parameter *sl-MultiReserveResource* is configured; 0 bit otherwise.<br><br>-     DMRS pattern – $\lceil \log_2 N_{\text{pattern}} \rceil$ bits as defined in clause 8.4.1.1.2 of [4, TS 38.211], where $N_{\text{pattern}}$ is the number of DMRS patterns configured by higher layer parameter *sl-PSSCH-DMRS-TimePatternList*.<br><br>-     2nd-stage SCI format – 2 bits as defined in Table 8.3.1.1-1.<br><br>-     Beta_offset indicator – 2 bits as provided by higher layer parameter *sl-BetaOffsets2ndSCI* and Table 8.3.1.1-2. |

- Number of DMRS port – 1 bit as defined in Table 8.3.1.1-3.

- Modulation and coding scheme – 5 bits as defined in clause 8.1.3 of [6, TS 38.214].

- Additional MCS table indicator – as defined in clause 8.1.3.1 of [6, TS 38.214]: 1 bit if one MCS table is configured by higher layer parameter *sl-Additional-MCS-Table*; 2 bits if two MCS tables are configured by higher layer parameter *sl- Additional-MCS-Table*; 0 bit otherwise.

- PSFCH overhead indication – 1 bit as defined clause 8.1.3.2 of [6, TS 38.214] if higher layer parameter *sl-PSFCH-Period* = 2 or 4; 0 bit otherwise.

- Reserved – a number of bits as determined by higher layer parameter *sl-NumReservedBits*, with value set to zero.

**Table 8.3.1.1-1: 2nd-stage SCI formats**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

**Table 8.3.1.1-2: Mapping of Beta_offset indicator values to indexes in Table 9.3-2 of [5, TS38.213]**

| Value of Beta_offset indicator | Beta_offset index in Table 9.3-2 of [5, TS38.213] |
|---|---|
| 00 | 1st index provided by higher layer parameter *sl-BetaOffsets2ndSCI* |
| 01 | 2nd index provided by higher layer parameter *sl-BetaOffsets2ndSCI* |
| 10 | 3rd index provided by higher layer parameter *sl-BetaOffsets2ndSCI* |
| 11 | 4th index provided by higher layer parameter *sl-BetaOffsets2ndSCI* |

**Table 8.3.1.1-3: Number of DMRS port(s)**

| Value of the Number of DMRS port field | Antenna ports |
|---|---|
| 0 | 1000 |
| 1 | 1000 and 1001 |

Table 7 shows an example of a 2nd-stage SCI format.

【Table 7】

| 3GPP TS 38.212 |
|---|
| 8.4.1.1  SCI format 2-A<br><br>SCI format 2-A is used for the decoding of PSSCH, with HARQ operation when HARQ-ACK information includes ACK or NACK, when HARQ-ACK information includes only NACK, or when there is no feedback of HARQ-ACK information.<br><br>The following information is transmitted by means of the SCI format 2-A:<br><br>-        HARQ process number –  4  bits as defined in clause 16.4 of [5, TS 38.213].<br><br>-        New data indicator – 1 bit as defined in clause 16.4 of [5, TS 38.213].<br><br>-        Redundancy version – 2 bits as defined in clause 16.4 of [6, TS 38.214].<br><br>-        Source ID – 8 bits as defined in clause 8.1 of [6, TS 38.214].<br><br>-        Destination ID – 16 bits as defined in clause 8.1 of [6, TS 38.214].<br><br>-        HARQ feedback enabled/disabled indicator – 1 bit as defined in clause 16.3 of [5, TS 38.213].<br><br>-        Cast type indicator – 2 bits as defined in Table 8.4.1.1-1.<br><br>-        CSI request – 1 bit as defined in clause 8.2.1 of [6, TS 38.214].<br><br>**Table 8.4.1.1-1: Cast type indicator**<br><br><table><tr><th>Value of Cast type indicator</th><th>Cast type</th></tr><tr><td>00</td><td>Broadcast</td></tr><tr><td>01</td><td>Groupcast<br>when HARQ-ACK information includes ACK or NACK</td></tr><tr><td>10</td><td>Unicast</td></tr></table> |

| 11 | Groupcast when HARQ-ACK information includes only NACK |
|----|----|

**8.4.1.2 SCI format 2-B**

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number – 4 bits as defined in clause 16.4 of [5, TS 38.213].

- New data indicator – 1 bit as defined in clause 16.4 of [5, TS 38.213].

- Redundancy version – 2 bits as defined in clause 16.4 of [6, TS 38.214].

- Source ID – 8 bits as defined in clause 8.1 of [6, TS 38.214].

- Destination ID – 16 bits as defined in clause 8.1 of [6, TS 38.214].

- HARQ feedback enabled/disabled indicator – 1 bit as defined in clause 16.3 of [5, TS 38.213].

- Zone ID – 12 bits as defined in clause 5.8.11 of [9, TS 38.331].

- Communication range requirement – 4 bits determined by higher layer parameter *sl-ZoneConfigMCR-Index*.

Referring to (a) or (b) of FIG. 6, in step S630, the first UE may receive the PSFCH based on Table 8. For example, the first UE and the second UE may determine a PSFCH resource based on Table 8, and the second UE may transmit HARQ feedback to the first UE using the PSFCH resource.

【Table 8】

| 3GPP TS 38.213 |
|----|
| 16.3    UE procedure for reporting HARQ-ACK on sidelink<br><br>A UE can be indicated by an SCI format scheduling a PSSCH reception, in one or more sub-channels from a number of $N_{subch}^{PSSCH}$ sub-channels, to transmit a PSFCH with HARQ-ACK information in response to the PSSCH reception. The UE provides HARQ-ACK information that includes ACK or NACK, or only NACK. |

A UE can be provided, by *sl-PSFCH-Period-r16*, a number of slots in a resource pool for a period of PSFCH transmission occasion resources. If the number is zero, PSFCH transmissions from the UE in the resource pool are disabled.

A UE expects that a slot $t'^{SL}_k$ ($0 \le k < T'_{max}$) has a PSFCH transmission occasion resource if $k \bmod N^{PSFCH}_{PSSCH} = 0$, where $t'^{SL}_k$ is defined in [6, TS 38.214], and $T'_{max}$ is a number of slots that belong to the resource pool within 10240 msec according to [6, TS 38.214], and $N^{PSFCH}_{PSSCH}$ is provided by *sl-PSFCH-Period-r16*.

A UE may be indicated by higher layers to not transmit a PSFCH in response to a PSSCH reception [11, TS 38.321].

If a UE receives a PSSCH in a resource pool and the HARQ feedback enabled/disabled indicator field in an associated SCI format 2-A or a SCI format 2-B has value 1 [5, TS 38.212], the UE provides the HARQ-ACK information in a PSFCH transmission in the resource pool. The UE transmits the PSFCH in a first slot that includes PSFCH resources and is at least a number of slots, provided by *sl-MinTimeGapPSFCH-r16*, of the resource pool after a last slot of the PSSCH reception.

A UE is provided by *sl-PSFCH-RB-Set-r16* a set of $M^{PSFCH}_{PRB,set}$ PRBs in a resource pool for PSFCH transmission in a PRB of the resource pool. For a number of $N_{subch}$ sub-channels for the resource pool, provided by *sl-NumSubchannel*, and a number of PSSCH slots associated with a PSFCH slot that is less than or equal to $N^{PSFCH}_{PSSCH}$, the UE allocates the $[(i + j \cdot N^{PSFCH}_{PSSCH}) \cdot M^{PSFCH}_{subch,slot}, (i + 1 + j \cdot N^{PSFCH}_{PSSCH}) \cdot M^{PSFCH}_{subch,slot} - 1]$ PRBs from the $M^{PSFCH}_{PRB,set}$ PRBs to slot $i$ among the PSSCH slots associated with the PSFCH slot and sub-channel $j$, where $M^{PSFCH}_{subch,slot} = M^{PSFCH}_{PRB,set} / (N_{subch} \cdot N^{PSFCH}_{PSSCH})$, $0 \le i < N^{PSFCH}_{PSSCH}$, $0 \le j < N_{subch}$, and the allocation starts in an ascending order of $i$ and continues in an ascending order of $j$. The UE expects that $M^{PSFCH}_{PRB,set}$ is a multiple of $N_{subch} \cdot N^{PSFCH}_{PSSCH}$.

A UE determines a number of PSFCH resources available for multiplexing HARQ-ACK information in a PSFCH transmission as $R^{PSFCH}_{PRB,CS} = N^{PSFCH}_{type} \cdot M^{PSFCH}_{subch,slot} \cdot N^{PSFCH}_{CS}$ where $N^{PSFCH}_{CS}$ is a number of cyclic shift pairs for the resource pool and, based on an indication by higher layers,

- $N^{PSFCH}_{type} = 1$ and the $M^{PSFCH}_{subch,slot}$ PRBs are associated with the starting sub-channel of the corresponding PSSCH

- $N^{PSFCH}_{type} = N^{PSSCH}_{subch}$ and the $N^{PSSCH}_{subch} \cdot M^{PSFCH}_{subch,slot}$ PRBs are associated with one or more sub-channels from the $N^{PSSCH}_{subch}$ sub-channels of the corresponding PSSCH

The PSFCH resources are first indexed according to an ascending order of the PRB index, from the $N_{\text{type}}^{\text{PSFCH}} \cdot M_{\text{subch,slot}}^{\text{PSFCH}}$ PRBs, and then according to an ascending order of the cyclic shift pair index from the $N_{\text{CS}}^{\text{PSFCH}}$ cyclic shift pairs.

A UE determines an index of a PSFCH resource for a PSFCH transmission in response to a PSSCH reception as $(P_{\text{ID}} + M_{\text{ID}}) mod R_{\text{PRB,CS}}^{\text{PSFCH}}$ where $P_{\text{ID}}$ is a physical layer source ID provided by SCI format 2-A or 2-B [5, TS 38.212] scheduling the PSSCH reception, and $M_{\text{ID}}$ is the identity of the UE receiving the PSSCH as indicated by higher layers if the UE detects a SCI format 2-A with Cast type indicator field value of "01"; otherwise, $M_{\text{ID}}$ is zero.

A UE determines a $m_0$ value, for computing a value of cyclic shift $\alpha$ [4, TS 38.211], from a cyclic shift pair index corresponding to a PSFCH resource index and from $N_{\text{CS}}^{\text{PSFCH}}$ using Table 16.3-1.

**Table 16.3-1: Set of cyclic shift pairs**

| $N_{\text{CS}}^{\text{PSFCH}}$ | $m_0$ | | | | | |
|---|---|---|---|---|---|---|
| | Cyclic Shift Pair Index 0 | Cyclic Shift Pair Index 1 | Cyclic Shift Pair Index 2 | Cyclic Shift Pair Index 3 | Cyclic Shift Pair Index 4 | Cyclic Shift Pair Index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

A UE determines a $m_{\text{cs}}$ value, for computing a value of cyclic shift $\alpha$ [4, TS 38.211], as in Table 16.3-2 if the UE detects a SCI format 2-A with Cast type indicator field value of "01" or "10", or as in Table 16.3-3 if the UE detects a SCI format 2-B or a SCI format 2-A with Cast type indicator field value of "11". The UE applies one cyclic shift from a cyclic shift pair to a sequence used for the PSFCH transmission [4, TS 38.211].

Table 16.3-2: Mapping of HARQ-ACK information bit values to a cyclic shift, from a cyclic shift pair, of a sequence for a PSFCH transmission when HARQ-ACK information includes ACK or NACK

| HARQ-ACK Value | 0 (NACK) | 1 (ACK) |
|---|---|---|
| Sequence cyclic shift | 0 | 6 |

Table 16.3-3: Mapping of HARQ-ACK information bit values to a cyclic shift, from a cyclic shift pair, of a sequence for a PSFCH transmission when HARQ-ACK information includes only NACK

| HARQ-ACK Value | 0 (NACK) | 1 (ACK) |
|---|---|---|
| Sequence cyclic shift | 0 | N/A |

Referring to (a) of FIG. 6, in step S640, the first UE may transmit SL HARQ feedback to the base station through the PUCCH and/or the PUSCH based on Table 9.

【Table 9】

| 3GPP TS 38.213 |
|---|
| 16.5    UE procedure for reporting HARQ-ACK on uplink<br><br>A UE can be provided PUCCH resources or PUSCH resources [12, TS 38.331] to report HARQ-ACK information that the UE generates based on HARQ-ACK information that the UE obtains from PSFCH receptions, or from absence of PSFCH receptions. The UE reports HARQ-ACK information on the primary cell of the PUCCH group, as described in Clause 9, of the cell where the UE monitors PDCCH for detection of DCI format 3_0.<br><br>For SL configured grant Type 1 or Type 2 PSSCH transmissions by a UE within a time period provided by *sl-PeriodCG*, the UE generates one HARQ-ACK information bit in response to the PSFCH receptions to multiplex in a PUCCH transmission occasion that is after a last time resource, in a set of time resources.<br><br>For PSSCH transmissions scheduled by a DCI format 3_0, a UE generates HARQ-ACK information in response to PSFCH receptions to multiplex in a PUCCH transmission occasion that is after a last time resource in a set of time resources provided by the DCI format 3_0.<br><br>For each PSFCH reception occasion, from a number of PSFCH reception occasions, the UE generates HARQ-ACK information to report in a PUCCH or PUSCH transmission. The UE can be |

indicated by a SCI format to perform one of the following and the UE constructs a HARQ-ACK codeword with HARQ-ACK information, when applicable

- if the UE receives a PSFCH associated with a SCI format 2-A with Cast type indicator field value of "10"

- generate HARQ-ACK information with same value as a value of HARQ-ACK information the UE determines from a PSFCH reception in the PSFCH reception occasion and, if the UE determines that a PSFCH is not received at the PSFCH reception occasion, generate NACK

- if the UE receives a PSFCH associated with a SCI format 2-A with Cast type indicator field value of "01"

- generate ACK if the UE determines ACK from at least one PSFCH reception occasion, from the number of PSFCH reception occasions, in PSFCH resources corresponding to every identity $M_{ID}$ of the UEs that the UE expects to receive the PSSCH, as described in Clause 16.3; otherwise, generate NACK

- if the UE receives a PSFCH associated with a SCI format 2-B or a SCI format 2-A with Cast type indicator field value of "11"

- generate ACK when the UE determines absence of PSFCH reception for each PSFCH reception occasion from the number of PSFCH reception occasions; otherwise, generate NACK

After a UE transmits PSSCHs and receives PSFCHs in corresponding PSFCH resource occasions, the priority value of HARQ-ACK information is same as the priority value of the PSSCH transmissions that is associated with the PSFCH reception occasions providing the HARQ-ACK information.

The UE generates a NACK when, due to prioritization, as described in Clause 16.2.4, the UE does not receive PSFCH in any PSFCH reception occasion associated with a PSSCH transmission in a resource provided by a DCI format 3_0 with CRC scrambled by a SL-RNTI or, for a configured grant, in a resource provided in a single period and for which the UE is provided a PUCCH resource to report HARQ-ACK information. The priority value of the NACK is same as the priority value of the PSSCH transmission.

The UE generates a NACK when, due to prioritization as described in Clause 16.2.4, the UE does not transmit a PSSCH in any of the resources provided by a DCI format 3_0 with CRC scrambled by SL-RNTI or, for a configured grant, in any of the resources provided in a single period and for which the UE is provided a PUCCH resource to report HARQ-ACK information. The priority

value of the NACK is same as the priority value of the PSSCH that was not transmitted due to prioritization.

The UE generates an ACK if the UE does not transmit a PSCCH with a SCI format 1-A scheduling a PSSCH in any of the resources provided by a configured grant in a single period and for which the UE is provided a PUCCH resource to report HARQ-ACK information. The priority value of the ACK is same as the largest priority value among the possible priority values for the configured grant.

A UE does not expect to be provided PUCCH resources or PUSCH resources to report HARQ-ACK information that start earlier than $(N + 1) \cdot (2048 + 144) \cdot \kappa \cdot 2^{\mu} \cdot T_c$ after the end of a last symbol of a last PSFCH reception occasion, from a number of PSFCH reception occasions that the UE generates HARQ-ACK information to report in a PUCCH or PUSCH transmission, where

- $\kappa$ and $T_c$ are defined in [4, TS 38.211]
- $\mu = \min(\mu_{SL}, \mu_{UL})$, where $\mu_{SL}$ is the SCS configuration of the SL BWP and $\mu_{UL}$ is the SCS configuration of the active UL BWP on the primary cell
- $N$ is determined from $\mu$ according to Table 16.5-1

**Table 16.5-1: Values of $N$**

| $\mu$ | $N$ |
|---|---|
| 0 | 14 |
| 1 | 18 |
| 2 | 28 |
| 3 | 32 |

With reference to slots for PUCCH transmissions and for a number of PSFCH reception occasions ending in slot $n$, the UE provides the generated HARQ-ACK information in a PUCCH transmission within slot $n + k$, subject to the overlapping conditions in Clause 9.2.5, where $k$ is a number of slots indicated by a PSFCH-to-HARQ feedback timing indicator field, if present, in a DCI format indicating a slot for PUCCH transmission to report the HARQ-ACK information, or $k$ is provided by *sl-PSFCH-ToPUCCH-CG-Type1-r16*. $k = 0$ corresponds to a last slot for a PUCCH transmission that would overlap with the last PSFCH reception occasion assuming that the start of the sidelink frame is same as the start of the downlink frame [4, TS 38.211].

For a PSSCH transmission by a UE that is scheduled by a DCI format, or for a SL configured grant Type 2 PSSCH transmission activated by a DCI format, the DCI format indicates to the UE that a PUCCH resource is not provided when a value of the PUCCH resource indicator field is zero and a value of PSFCH-to-HARQ feedback timing indicator field, if present, is zero. For a SL configured grant Type 1 PSSCH transmission, a PUCCH resource can be provided by *sl-NIPUCCH-AN-r16* and *sl-PSFCH-ToPUCCH-CG-Type1-r16*. If a PUCCH resource is not provided, the UE does not transmit a PUCCH with generated HARQ-ACK information from PSFCH reception occasions.

(continued)

For a PUCCH transmission with HARQ-ACK information, a UE determines a PUCCH resource after determining a set of PUCCH resources for $O_{UCI}$ HARQ-ACK information bits, as described in Clause 9.2.1. The PUCCH resource determination is based on a PUCCH resource indicator field [5, TS 38.212] in a last DCI format 3_0, among the DCI formats 3_0 that have a value of a PSFCH-to-HARQ feedback timing indicator field indicating a same slot for the PUCCH transmission, that the UE detects and for which the UE transmits corresponding HARQ-ACK information in the PUCCH where, for PUCCH resource determination, detected DCI formats are indexed in an ascending order across PDCCH monitoring occasion indexes.

A UE does not expect to multiplex HARQ-ACK information for more than one SL configured grants in a same PUCCH.

A priority value of a PUCCH transmission with one or more sidelink HARQ-ACK information bits is the smallest priority value for the one or more HARQ-ACK information bits.

In the following, the CRC for DCI format 3_0 is scrambled with a SL-RNTI or a SL-CS-RNTI.

Sidelink Control Information (SCI)

Control information transmitted by a BS to a UE through a PDCCH may be referred to as downlink control information (DCI), whereas control information transmitted by the UE to another UE through a PSCCH may be referred to as SCI. For example, the UE may know in advance a start symbol of the PSCCH and/or the number of symbols of the PSCCH, before decoding the PSCCH. For example, the SCI may include SL scheduling information. For example, the UE may transmit at least one SCI to another UE to schedule the PSSCH. For example, one or more SCI formats may be defined.

For example, a transmitting UE may transmit the SCI to a receiving UE on the PSCCH. The receiving UE may decode one SCI to receive the PSSCH from the transmitting UE.

For example, the transmitting UE may transmit two consecutive SCIs (e.g., 2-stage SCI) to the receiving UE on the PSCCH and/or the PSSCH. The receiving UE may decode the two consecutive SCIs (e.g., 2-stage SCI) to receive the PSSCH from the transmitting UE. For example, if SCI configuration fields are divided into two groups in consideration of a (relatively) high SCI payload size, an SCI including a first SCI configuration field group may be referred to as a first SCI or a 1st SCI, and an SCI including a second SCI configuration field group may be referred to as a second SCI or a 2nd SCI. For example, the transmitting UE may transmit the first SCI to the receiving UE through the PSCCH. For example, the transmitting UE may transmit the second SCI to the receiving UE on the PSCCH and/or the PSSCH. For example, the second SCI may be transmitted to the receiving UE through an (independent) PSCCH, or may be transmitted in a piggyback manner together with data through the PSSCH. For example, two consecutive SCIs may also be applied to different transmissions (e.g., unicast, broadcast, or groupcast).

In various embodiments of the present disclosure, since the transmitting UE may transmit at least one of the SCI, the first SCI, and/or the second SCI to the receiving UE through the PSCCH, the PSCCH may be replaced/substituted with at least one of the SCI, the first SCI, and/or the second SCI. Additionally/alternatively, for example, the SCI may be replaced/substituted with at least one of the PSCCH, the first SCI, and/or the second SCI. Additionally/alternatively, for example, since the transmitting UE may transmit the second SCI to the receiving UE through the PSSCH, the PSSCH may be replaced/substituted with the second SCI.

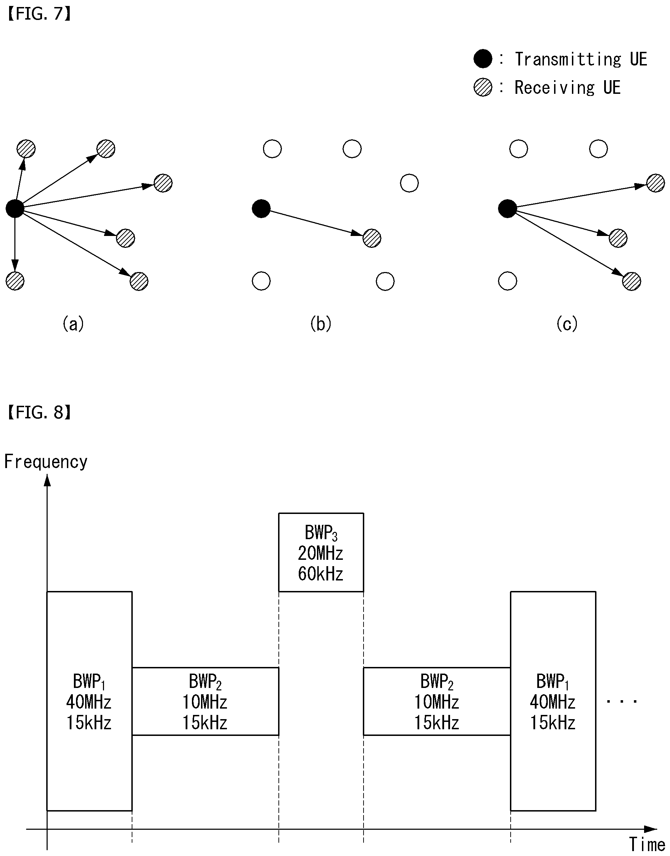

FIG. 7 shows three cast types based on an embodiment of the present disclosure.

Specifically, (a) of FIG. 7 shows broadcast-type SL communication, (b) of FIG. 7 shows unicast type-SL communication, and (c) of FIG. 7 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, an RRC connection establishment between UEs will be described.

For V2X or SL communication, a transmitting UE may need to establish a (PC5) RRC connection with a receiving UE. For example, the UE may obtain V2X-specific SIB. For a UE which is configured to transmit V2X or SL communication by a higher layer and which has data to be transmitted, if a frequency at which at least the UE is configured to transmit SL communication is included in the V2X-specific SIB, the UE may establish an RRC connection with another UE without including a transmission resource pool for the frequency. For example, if an RRC connection is established between the transmitting UE and the receiving UE, the transmitting UE may perform unicast communication with respect to the receiving UE through the established RRC connection.

When the RRC connection is established between the UEs, the transmitting UE may transmit an RRC message to the receiving UE.

The receiving UE may perform antenna/resource de-mapping, demodulation, and decoding for received information. The information may be transferred to the RRC layer via the MAC layer, the RLC layer, and the PDCP layer. Accordingly, the receiving UE may receive the RRC message generated by the transmitting UE.

V2X or SL communication may be supported for a UE of an RRC_CONNECTED mode, a UE of an RRC_IDLE mode, and a UE of an (NR) RRC_INACTIVE mode. That is, the UE of the RRC_CONNECTED mode, the UE of the RRC_IDLE mode, and the UE of the (NR) RRC_INACTIVE mode may perform V2X or SL communication. The UE of the RRC_INACTIVE mode or the UE of the RRC_IDLE mode may perform V2X or SL communication by using a cell-specific configuration included in V2X-specific SIB.

RRC may be used to exchange at least UE capability and AS layer configuration. For example, a UE 1 may transmit UE capability and AS layer configuration of the UE 1 to a UE 2, and the UE 1 may receive UE capability and AS layer configuration of the UE 2 from the UE 2. In case of UE capability transfer, an information flow may be triggered during or after PC5-S signaling for a direct link setup.

Measurement and Reporting for SL

Hereinafter, SL measurement and reporting will be described.

For the purpose of QoS prediction, initial transmission parameter setting, link adaptation, link management, admission control, or the like, SL measurement and reporting (e.g., RSRP, RSRQ) between UEs may be considered in SL. For example, a receiving UE may receive a reference signal from a transmitting UE, and the receiving UE may measure a channel state for the transmitting UE based on the reference signal. In addition, the receiving UE may report channel state information (CSI) to the transmitting UE. SL-related measurement and reporting may include measurement and reporting of CBR and reporting of location information. Examples of channel status information (CSI) for V2X may include a channel quality indicator (CQI), a precoding matrix index (PM), a rank indicator (RI), reference signal received power (RSRP), reference signal received quality (RSRQ), pathgain/pathloss, a sounding reference symbol (SRS) resource indicator (SRI), a SRI-RS resource indicator (CRI), an interference condition, a vehicle motion, or the like. In case of unicast communication, CQI, RI, and PMI or some of them may be supported in a non-subband-based aperiodic CSI report under the assumption of four or less antenna ports. A CSI procedure may not be dependent on a standalone reference signal (RS). A CSI report may be activated or deactivated based on a configuration.

For example, the transmitting UE may transmit CSI-RS to the receiving UE, and the receiving UE may measure CQI or RI based on the CSI-RS. For example, the CSI-RS may be referred to as SL CSI-RS. For example, the CSI-RS may be confined within PSSCH transmission. For example, the transmitting UE may perform transmission to the receiving UE by including the CSI-RS on the PSSCH.

Hybrid Automatic Repeat Request (HARQ) for SL

Hereinafter, a hybrid automatic repeat request (HARQ) procedure will be described.

An error compensation scheme is used to secure communication reliability. Examples of the error compensation scheme may include a forward error correction (FEC) scheme and an automatic repeat request (ARQ) scheme. In the FEC scheme, errors in a receiving end are corrected by attaching an extra error correction code to information bits. The FEC scheme has an advantage in that time delay is small and no information is additionally exchanged between a transmitting end and the receiving end but also has a disadvantage in that system efficiency deteriorates in a good channel environment. The ARQ scheme has an advantage in that transmission reliability can be increased but also has a disadvantage in that a time delay occurs and system efficiency deteriorates in a poor channel environment.

A hybrid automatic repeat request (HARQ) scheme is a combination of the FEC scheme and the ARQ scheme. In the HARQ scheme, it is determined whether an unrecoverable error is included in data received by a physical layer, and retransmission is requested upon detecting the error, thereby improving performance.

In case of SL unicast and groupcast, HARQ feedback and HARQ combining in the physical layer may be supported. For example, when a receiving UE operates in a resource allocation mode 1 or 2, the receiving UE may receive the PSSCH from a transmitting UE, and the receiving UE may transmit HARQ feedback for the PSSCH to the transmitting UE by using a sidelink feedback control information (SFCI) format through a physical sidelink feedback channel (PSFCH).

For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.

(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.

(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

In the present disclosure, HARQ-ACK may be referred to as ACK, ACK information, or positive-ACK information, and HARQ-NACK may be referred to as NACK, NACK information, or negative-ACK information.

Bandwidth Part and Resource Pool

Hereinafter, a bandwidth part (BWP) and a resource pool will be described.

When using bandwidth adaptation (BA), a reception bandwidth and transmission bandwidth of a UE are not necessarily as large as a bandwidth of a cell, and the reception bandwidth and transmission bandwidth of the BS may be adjusted. For example, a network/BS may inform the UE of bandwidth adjustment. For example, the UE receive information/configuration for bandwidth adjustment from the network/BS. In this case, the UE may perform bandwidth adjustment based on the received information/configuration. For example, the bandwidth adjustment may include an increase/decrease of the bandwidth, a location change of the bandwidth, or a change in subcarrier spacing of the bandwidth.

For example, the bandwidth may be decreased during a period in which activity is low to save power. For example, the location of the bandwidth may move in a frequency domain. For example, the location of the bandwidth may move in the frequency domain to increase scheduling flexibility. For example, the subcarrier spacing of the bandwidth may be changed. For example, the subcarrier spacing of the bandwidth may be changed to allow a different service. A subset of a total cell bandwidth of a cell may be referred to as a bandwidth part (BWP). The BA may be performed when the BS/network configures the BWP to the UE and the BS/network informs the UE of the BWP currently in an active state among the configured BWPs.

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. The SL BWP may be (pre-)configured in a carrier with respect to an out-of-coverage NR V2X UE and an RRC_IDLE UE. For the UE in the RRC _CONNECTED mode, at least one SL BWP may be activated in the carrier.

FIG. 8 illustrates a plurality of BWPs based on an embodiment of the present disclosure.

Referring to FIG. 8, a BWP1 having a bandwidth of 40 MHz and a subcarrier spacing of 15 kHz, a BWP2 having a bandwidth of 10 MHz and a subcarrier spacing of 15 kHz, and a BWP3 having a bandwidth of 20 MHz and a subcarrier spacing of 60 kHz may be configured.

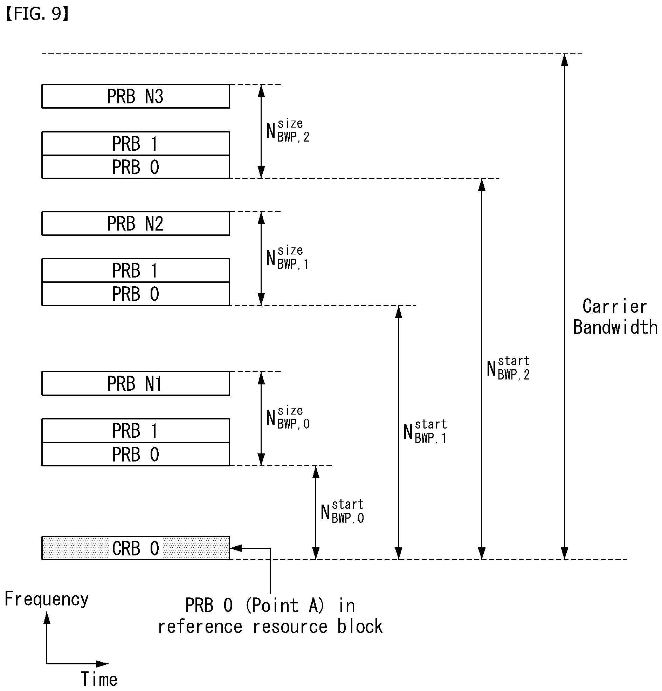

FIG. 9 illustrates a BWP based on an embodiment of the present disclosure. It is assumed in the embodiment of FIG. 9 that the number of BWPs is 3.

Referring to FIG. 9, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset NstartBWP from the point A, and a bandwidth NsizeBWP. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

The BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. The SL BWP may be (pre-)configured in a carrier with respect to an out-of-coverage NR V2X UE and an RRC_IDLE UE. For the UE in the RRC _CONNECTED mode, at least one SL BWP may be activated in the carrier.

A resource pool may be a group of time-frequency resources that may be used for SL transmission and/or SL reception. From a perspective of the UE, time-domain resources in the resource pool may not be consecutive. A plurality of resource pools may be (pre-)configured to the UE in one carrier. From a perspective of a physical layer, the UE may perform unicast, groupcast, and broadcast communication by using the configured or pre-configured resource pool.

Sidelink (SL) Congestion Control

Hereinafter, sidelink (SL) congestion control will be described.

If a UE autonomously determines an SL transmission resource, the UE also autonomously determines a size and frequency of use for a resource used by the UE. Of course, due to a constraint from a network or the like, it may be restricted to use a resource size or frequency of use, which is greater than or equal to a specific level. However, if all UEs use a relatively great amount of resources in a situation where many UEs are concentrated in a specific region at a specific time, overall performance may significantly deteriorate due to mutual interference.

Accordingly, the UE may need to observe a channel situation. If it is determined that an excessively great amount of resources are consumed, it is preferable that the UE autonomously decreases the use of resources. In the present disclosure, this may be defined as congestion control (CR). For example, the UE may determine whether energy measured in a unit time/frequency resource is greater than or equal to a specific level, and may adjust an amount and frequency of use for its transmission resource based on a ratio of the unit time/frequency resource in which the energy greater than or equal to the specific level is observed. In the present disclosure, the ratio of the time/frequency resource in which the energy greater than or equal to the specific level is observed may be defined as a channel busy ratio (CBR). The UE may measure the CBR for a channel/frequency. Additionally, the UE may transmit the measured CBR to the network/BS.

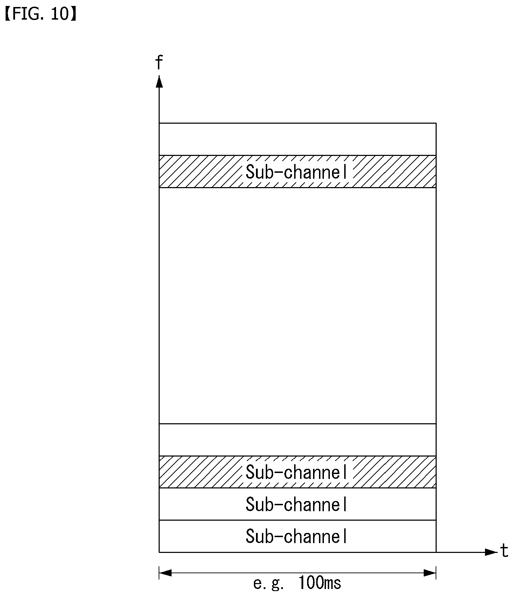

FIG. 10 illustrates a resource unit for CBR measurement based on an embodiment of the present disclosure.

Referring to FIG. 10, CBR may denote the number of sub-channels in which a measurement result value of a received signal strength indicator (RSSI) has a value greater than or equal to a pre-configured threshold as a result of measuring the RSSI by a UE on a sub-channel basis for a specific period (e.g., 100 ms). Alternatively, the CBR may denote a ratio of sub-channels having a value greater than or equal to a pre-configured threshold among sub-channels for a specific duration. For example, in the embodiment of FIG. 10, if it is assumed that a hatched sub-channel is a sub-channel having a value greater than or equal to a pre-configured threshold, the CBR may denote a ratio of the hatched sub-channels for a period of 100 ms. Additionally, the CBR may be reported to the BS.

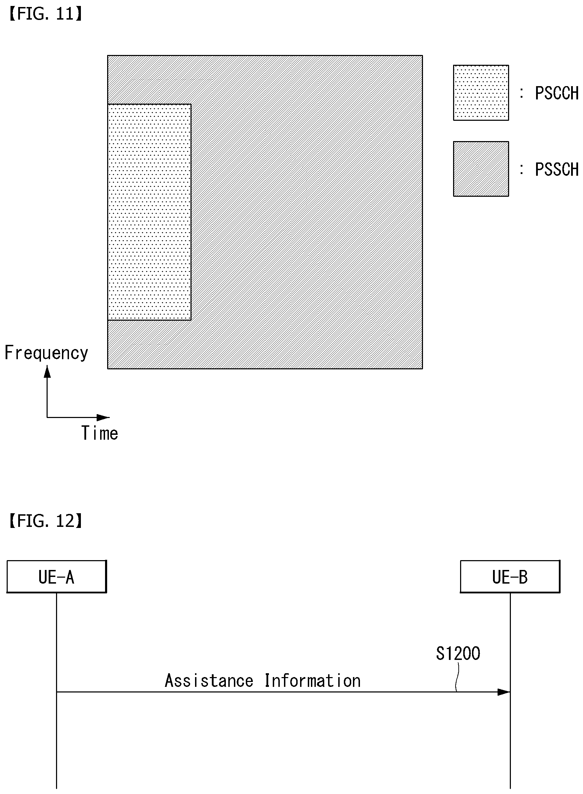

FIG. 11 illustrates a resource pool related to CBR measurement.

For example, as shown in the embodiment of FIG. 11, if a PSCCH and a PSSCH are multiplexed, the UE may perform one CBR measurement for one resource pool. Herein, if a PSFCH resource is configured or pre-configured, the PSFCH resource may be excluded in the CBR measurement.

Further, congestion control considering a priority of traffic (e.g. packet) may be necessary. To this end, for example, the UE may measure a channel occupancy ratio (CR). Specifically, the UE may measure the CBR, and the UE may determine a maximum value CRlimitk of a channel occupancy ratio k (CRk) that can be occupied by traffic corresponding to each priority (e.g., k) based on the CBR. For example, the UE may derive the maximum value CRlimitk of the channel occupancy ratio with respect to a priority of each traffic, based on a predetermined table of CBR measurement values. For example, in case of traffic having a relatively high priority, the UE may derive a maximum value of a relatively great channel occupancy ratio. Thereafter, the UE may perform congestion control by restricting a total sum of channel occupancy ratios of traffic, of which a priority k is lower than i, to a value less than or equal to a specific value. Based on this method, the channel occupancy ratio may be more strictly restricted for traffic having a relatively low priority.

In addition thereto, the UE may perform SL congestion control by using a method of adjusting a level of transmit power, dropping a packet, determining whether retransmission is to be performed, adjusting a transmission RB size (MCS coordination), or the like.

Table 10 shows an example of SL CBR and SL RSSI.

[Table 10]

| SL CBR | |
| --- | --- |
| Definition | SL Channel Busy Ratio (SL CBR) measured in slot $n$ is defined as the portion of sub-channels in the resource pool whose SL RSSI measured by the UE exceed a (pre-)configured threshold sensed over a CBR measurement window [$n$-a, $n$-1], wherein a is equal to 100 or $100 \cdot 2^{\mu}$ slots, according to higher layer parameter *timeWindowSize-CBR*. |
| Applicable for | RRC_IDLE intra-frequency, RRC_IDLE inter-frequency, RRC_CONNECTED intra-frequency, RRC_CONNECTED inter-frequency |
| SL RSSI | |
| Definition | Sidelink Received Signal Strength indicator (SL RSSI) is defined as the linear average of the total received power (in [W]) observed in the configured sub-channel in OFDM symbols of a slot configured for PSCCH and PSSCH, starting from the $2^{nd}$ OFDM symbol. For frequency range 1, the reference point for the SL RSSI shall be the antenna connector of the UE. For frequency range 2, SL RSSI shall be measured based on the combined signal from antenna elements corresponding to a given receiver branch. For frequency range 1 and 2, if receiver diversity is in use by the UE, the reported SL RSSI value shall not be lower than the corresponding SL RSSI of any of the individual receiver branches. |
| Applicable for | RRC_IDLE intra-frequency, RRC_IDLE inter-frequency, RRC_CONNECTED intra-frequency, RRC_CONNECTED inter-frequency |

Referring to Table 10, the slot index may be based on a physical slot index.

Table 11 shows an example of SL Channel Occupancy Ratio (CR).

[Table 11]

| Definition | Sidelink Channel Occupancy Ratio (SL CR) evaluated at slot n is defined as the total number of sub-channels used for Its transmissions In slots [n-a, *n-1*] and granted in slots [$n$, $n+b$] divided by the total number of configured sub-channels in the transmission pool over [$n$-a, $n+b$]. |
| --- | --- |
| Applicable for | RRC_IDLE intra-frequency, RRC_IDLE inter-frequency, RRC_CONNECTED intra-frequency, RRC_CONNECTED inter-frequency |
| NOTE 1: $\alpha$ is a positive integer and b is 0 or a positive integer; *a* and *b* are determined by UE implementation with *a+b+1* = 1000 or $1000 \cdot 2^{\mu}$ slots, according to higher layer parameter *timeWindowSize-CR,* b < (a+b+1)/2, and n+b shall not exceed the last transmission opportunity of the grant for the current transmission. | |

(continued)

> NOTE 2: SL CR is evaluated for each (re)transmission.
> NOTE 3: In evaluating SL CR, the UE shall assume the transmission parameter used at slot n is reused according to the existing grant(s) in slot [$n+1$, $n+b$] without packet dropping.
> NOTE 4: The slot index is based on physical slot index.
> NOTE 5: SL CR can be computed per priority level
> NOTE 6: A resource is considered granted if it is a member of a selected sidelink grant as defined in TS 38.321 [7].

In the present disclosure, a wording "configuration or definition" may be interpreted as being (pre-)configured from the base station or the network (via pre-defined signaling (e.g., SIB, MAC signaling, or RRC signaling). For example, "A may be configured" may include "the base station or network (pre-)configures/defines or announces A for the UE". Alternatively, the wording "configuration or definition" may be interpreted as being pre-configured or defined by a system. For example, "A may be configured" may include "A is pre-configured/defined by the system".

The base station may allocate the UE a resource (hereinafter, "SL resource") used for transmission and reception of SL channel/signal. For example, the base station may transmit information related to the resources to the UE. In the present disclosure, a scheme in which the base station allocates the SL resource to the UE may be referred to as mode 1 scheme, mode 1 operation, or resource allocation mode 1.

On the other hand, the UE may select the SL resource within a resource pool based on the sensing. In the present disclosure, a scheme in which the UE selects the SL resource may be referred to as mode 2 scheme, mode 2 operation, or resource allocation mode 3. For example, in the resource allocation mode 2, the UE may detect SCI transmitted by another UE, the UE may identify a resource reserved by another UE based on the SCI, and the UE may acquire an RSRP measurement value. And, the UE may select a resource to be used for the SL transmission except for a specific resource within a resource selection window based on the sensing result.

For the sensing operation, the UE may refer to resource allocation information received via the first SCI. However, due to overhead of the first SCI, an amount of information that the UE can acquire on the first SCI may be limited.

According to various embodiments of the present disclosure, a second UE may transmit additional assistance information in order to assist a sensing operation and/or a resource (re)selection operation of a first UE. For PSSCH detection performance improvement and/or half-duplex limit reduction and/or reserved resource selection for transmission and reception of a specific signal, etc., the first UE may use the assistance information received from the second UE. In an embodiment of the present disclosure, for convenience of explanation, it is assumed that a UE-A transmits assistance information to a UE-B. It is also assumed that the UE-B selects a resource for PSCCH/PSSCH to be transmitted to the UE-A and/or a resource for PSCCH/PSSCH to be transmitted to a UE-C (i.e., a third UE) based on the assistance information received from the UE-A.

FIG. 12 illustrates a procedure in which a UE-A transmits assistance information to a UE-B based on an embodiment of the present disclosure. The embodiment of FIG. 12 may be combined with various embodiments of the present disclosure.

Referring to FIG. 12, in step S1200, the UE-A may transmit assistance information to the UE-B. For example, the UE-B may select a resource for PSCCH/PSSCH to be transmitted to the UE-A based on the assistance information received from the UE-A, and the UE-B may perform SL transmission using the resource. For example, the UE-B may select a resource for PSCCH/PSSCH to be transmitted to the UE-C based on the assistance information received from the UE-A, and the UE-B may perform SL transmission using the resource. In the present disclosure, the assistance information or additional information may be referred as Inter-UE coordination information.

According to various embodiments of the present disclosure, the UE-B may transmit, to the UE-A, a signal requesting a transmission of the assistance information. Here, the assistance information/additional information may mean inter-UE coordination information, and the signal requesting the assistance information transmission/assistance information request signal/request for assistance information/request for additional information may mean a request for inter-UE coordination information. That is, in the present disclosure, the assistance information or the additional information may mean the inter-UE coordination information.

The inter-UE coordination information may be triggered by a request of the UE-B or a pre-configured condition. That is, the inter-UE coordination information may be triggered and transmitted by the pre-configured condition even if there is no request of the UE-B.

The inter-UE coordination information and/or the request for inter-UE coordination information may be transmitted based on the PSSCH. For example, the inter-UE coordination information and/or the request for inter-UE coordination information may be transmitted based on MAC-CE (e.g., inter-UE coordination request MAC CE, inter-UE coordination information MAC CE). For example, the inter-UE coordination information and/or the request for inter-UE coordination information may be transmitted based on the second SCI (second stage SCI format 2-C). For example, the inter-UE coordination information and/or the request for inter-UE coordination information may be transmitted based on the MAC-CE and the second SCI (second stage SCI format 2-C).

According to an embodiment of the present disclosure, the UE-A may provide the UE-B with preferred and/or non-preferred resources for future PSCCH/PSSCH transmission of the UE-B and/or SL reception availability time resources of the UE-A and/or SL reception unavailability time resource information of the UE-A and/or resource information that the UE-A is performing or is going to perform SL reception from another UE. The UE-B may select a PSCCH/PSSCH resource to be transmitted to the UE-A or a UE-C based on the information received from the UE-A.

In a channel transmitting additional information and/or additional information request, a first SCI, a second SCI, and/or a PSSCH (e.g., MAC-CE) are at least considered. In this case, when they are transmitted via only the first SCI and/or the second SCI without TB transmission, if there is a UE transmitting PSCCH/PSSCH in the same resource pool, an automatic gain control (AGC) period may be added at a receiving UE end, and a transient period may be added at a transmitting UE end.

A symbol in which mapping of the second SCI starts is a symbol including an actually transmitted PSSCH DMRS. An interval between a PSCCH symbol and the second SCI starting symbol may occur based on a DMRS pattern, a PSSCH allocation PRB (i.e., physical resource block assigned for PSSCH transmission), and a PSCCH allocation PRB (i.e., physical resource block assigned for PSCCH transmission). For example, when only the second SCI is transmitted to the PSCCH without TB transmission, the mapping of the second SCI may be changed to start from a first symbol of the PSSCH (by including or not including an AGC symbol). For example, when only the second SCI is transmitted to the PSSCH without TB transmission, the mapping of the second SCI may start at a symbol including a still actually transmitted DMRS, and the UE may perform mapping on the PSSCH resource before the DMRS symbol in the form of cyclic repetition of encoded modulation symbols for the second SCI.

When the UE transmits the additional information and/or the additional information request, the UE may transmit the PSSCH using a dummy TB or a data TB while using at least the second SCI. For example, if there is a TB to be transmitted when the UE-A transmits the additional information to the UE-B, the UE may transmit the PSSCH using the data TB, and if there is no TB to be transmitted, the UE may transmit the PSSCH using the dummy TB.

For example, when the UE-A transmits the dummy TB, the UE-A may indicate whether to transmit the dummy TB to the UE-B via the first SCI and/or the second SCI in order to prevent the UE-B from unnecessarily performing the PSSCH decoding. For example, even when the UE-B transmits the additional information request to the UE-A, the above idea can be expanded and applied. For example, the data TB transmitted via the PSSCH when transmitting the additional information or the additional information request in the above example may be partial information of L2-SOURCE ID and/or L2-DESTINATION ID in addition to L1-SOURCE ID and/or L1-DESTINATION ID. For example, data transmitted via the PSSCH when transmitting the additional information request in the above example may include information on the additional information request (e.g., the number of sub-channels, resource reservation cycle, priority value, C_resel value, and/or resource selection window, etc.).

The UE may use the second SCI to transmit the additional information and/or the additional information request, and may transmit the second SCI without the TB transmission or together with the TB transmission. For example, the UE may transmit only the second SCI using the PSSCH without the TB transmission. For example, the UE may transmit the data TB together with the second SCI using the PSSCH.

For example, it may be assumed that DESTINATION ID of the additional information transmitted by the UE-A is SOURCE ID of the UE-B or DESTINATION ID that the UE-B attempts to detect, and the UE-A has a MAC PDU to be transmitted again for the DESTINATION ID. When the MAC PDU is mapped to the PSSCH via the TB, the MAC PDU may be mapped to the PSSCH together with the second SCI including the additional information and may be transmitted to the UE-B.

For example, it may be assumed that DESTINATION ID of the additional information request transmitted by the UE-B is SOURCE ID of the UE-A or DESTINATION ID that the UE-A attempts to detect, and the UE-B has a MAC PDU to be transmitted again for the DESTINATION ID. When the MAC PDU is mapped to the PSSCH via the TB, the MAC PDU may be mapped to the PSSCH together with the second SCI including the additional information request and may be transmitted to the UE-A.

For example, when the second SCI including the additional information and/or the additional information request and the TB are mapped to the PSSCH and transmitted, the following embodiments may be considered.

According to an embodiment, SOURCE ID and/or DESTINATION ID may be determined based on MAC PDU (e.g., SOURCE/DESTINATION ID related to MAC PDU).

According to an embodiment, the UE may indicate whether to include additional information and/or additional information request to the second SCI using RESERVED BIT FIELD of the first SCI. For example, the indicator may indicate whether the second SCI includes the additional information or the additional information request. For example, the second SCI may be indicated whether the second SCI includes the additional information or the additional information request.

According to an embodiment, the UE may indicate whether to include additional information and/or additional information request to the second SCI using different second SCI formats and the indicator.

According to an embodiment, the UE may indicate whether only the second SCI including additional information and/or additional information request is transmitted to the PSSCH and/or both the second SCI and the TB are transmitted to the PSSCH, using RESERVED BIT FIELD of the first SCI.

According to an embodiment, the UE may indicate whether only the second SCI including additional information and/or additional information request is transmitted to the PSSCH and/or both the second SCI and the TB are transmitted to the PSSCH, using different second SCI formats and the indicator. For example, field configuration constituting the second SCI when only the second SCI including the additional information and/or the additional information request is transmitted to the PSSCH may be different from field configuration constituting the second SCI when both the second SCI and the TB are transmitted to the PSSCH. For example, when only the second SCI including the additional information and/or the additional information request is transmitted to the PSSCH, a field related to TB scheduling (HARQ process number, RV, NDI, cast type, HARQ feedback enabled or disabled indicator, CSI request, zone ID, and/or communication range requirement) may not be at least included. For example, the number of second SCIs transmitted to one PSSCH when only the second SCI including the additional information and/or the additional information request is transmitted to the PSSCH may be different from the number of second SCIs transmitted to one PSSCH when both the second SCI and the TB are transmitted to the PSSCH. For example, when only the second SCI including the additional information and/or the additional information request is transmitted to the PSSCH, only the second SCI may be transmitted, and when both the second SCI including the additional information and/or the additional information request and the TB are transmitted to the PSSCH, a second SCI scheduling the TB and a second SCI including the additional information request may be transmitted. For example, when the UE transmits the two (or more) second SCIs, the UE may concatenate the second SCIs and then commonly add CRC, and may perform encoding. For example, when the UE transmits the two (or more) second SCIs, the UE may add the CRC to each second SCI and perform encoding, and then may concatenate encoded bits or encoded symbols. For example, in the above example, the mapping order of the encoded bits or the encoded symbols for the second SCI scheduling the TB may be ahead. For example, in the above example, when determining the size for the TB, the number of mapped REs for the second SCI may consider only the TB scheduling.

The UE may transmit only the first SCI for additional information and/or additional information request without PSSCH transmission. For example, the UE may repeatedly perform PSCCH mapping for a PSSCH symbol duration. In other words, the PSCCH may be repeatedly transmitted for the PSSCH symbol duration. For example, in the above example, if the PSSCH symbol duration is not divided into PSCCH symbol duration, the last repetition of the PSCCH may be reduced in the form of PUNCTURING or RATE-MATCHING of some PSSCH symbols. For example, when repeating the PSCCH, the number of PRBs for the PSCCH may be maintained. For example, upon the PSCCH repetition, if the PRB for the PSCCH is smaller than the PRB constituting the sub-channel, the UE may fill the remaining PRB of the sub-channel through repetition or RATE-MATCHING for the PSCCH.

Additional information and/or additional information request may be transmitted at least through the TB of the PSSCH. In this case, there is a need to determine whether to multiplex with other MAC PDUs of the UE. For MAC PDUs that can be transmitted via the same TB, there may be a restriction that they all have the same DESTINATION ID. In this regard, the following embodiments may be considered.

According to an embodiment, it may be assumed that DESTINATION ID of the additional information transmitted by the UE-A is SOURCE ID of the UE-B or DESTINATION ID that the UE-B attempts to detect, and the UE-A has a MAC PDU to be transmitted for the DESTINATION ID. In this case, the UE-A may multiplex the MAC PDU with the additional information and the same TB and transmit it to the UE-B. In other words, if the additional information and data (e.g., MAC PDU) are multiplexed and transmitted, DESTINATION ID of the additional information and DESTINATION ID for transmission of the data (e.g. MAC PDU) may be the same.

According to an embodiment, it may be assumed that DESTINATION ID of the additional information request transmitted by the UE-B is SOURCE ID of the UE-A or DESTINATION ID that the UE-A attempts to detect, and the UE-B has a MAC PDU to be transmitted for the DESTINATION ID. In this case, the UE-B may multiplex the MAC PDU with the additional information request and the same TB and transmit it to the UE-A. In other words, if the additional information request and data (e.g., MAC PDU) are multiplexed and transmitted, DESTINATION ID of the additional information request and DESTINATION ID for transmission of the data (e.g. MAC PDU) may be the same.

The additional information and/or additional information request may be transmitted through a combination for the first SCI and/or the second SCI and/or the TB.

For example, when N resources are indicated in a frequency resource indicator value (FRIV) and/or a time resource indicator value (TRIV) of the first SCI, the following operations/configurations may be considered. A resource at the time at which a first resource or the first SCI is transmitted may be always fixed to a single sub-channel. Remaining reserved resources may follow the number of sub-channels indicated in the FRIV.

For example, information on resources corresponding to the HALF-DUPLEX problem or resources where the UE-A cannot perform SL reception from the UE-B may not be indicated through the first SCI.

For example, a container (e.g., the first SCI or the second SCI or the TB) to which the additional information can be transmitted may vary depending on factors or conditions generating the additional information. For example, for N resources transmitted through the additional information, a part of N resources transmitted through the TB (e.g., MAC CE) may be repeatedly transmitted to the second SCI and/or the first SCI. For example, resources corresponding to additional information indicated through the TB and the first SCI and/or the first SCI may not overlap each other.

For example, at least for preferred resource information, parameter information (e.g., transmission priority, transmission resource reservation period, number of transmission sub-channels, etc.) used to generate (determine) the preferred resource may be transmitted through the first SCI, and it may be equally applied to remaining channels and/or signals.

For example, at least for preferred resource information, parameter information (e.g., transmission priority, transmission resource reservation period, number of transmission sub-channels, etc.) used to generate (determine) the preferred resource may be transmitted through the second SCI, and it may be equally applied to remaining channels and/or signals.

For example, at least for preferred resource information, parameter information (e.g., transmission priority, transmission resource reservation period, number of transmission sub-channels, etc.) used to generate (determine) the preferred resource may be transmitted through the TB, and it may be equally applied to remaining channels and/or signals.

For example, for N resources transmitted through the additional information, the UE-A may randomly select resources to be transmitted through the second SCI and/or the first SCI.

For example, for N resources transmitted through the additional information, the UE-A may select resources, that are ahead in time, as resources to be transmitted through the second SCI and/or the first SCI.

For example, for N resources transmitted through the additional information, resources to be transmitted through the second SCI and/or the first SCI may be a resource that allows the UE-A to ensure that a round trip time (RTT) between PSSCH transmission resources is satisfied. For example, a value for at least one of i) a value of the RTT, ii) a PSFCH detection time constituting the RTT value, and/or iii) a next PSSCH preparation time may be a value that the UE-B transmits to the UE-A through a request signal. The value for at least one of the i) to iii) may be a (pre-)set value. The value for at least one of the i) to iii) may be a pre-defined value.

For example, if the number of bits to indicate resources provided as the additional information is equal to or greater than a predetermined level or exceeds a maximum supported size of the second SCI, the UE may not expect to transmit the additional information through the second SCI.

For example, more specifically, in the above situation, the UE may be (pre-)configured to transmit the additional information through MAC CE.

For example, the UE may transmit the additional information through the second SCI after avoiding the above situation (i.e., the situation in which the additional information cannot be transmitted through the second SCI) based on the following operation. This is described in detail below.

The UE may avoid the above situation by adjusting the number of reference time points of a TRIV indicator and/or a size of a reference time point indicator of the TRIV indicator and/or the number of sub-channels within a resource pool and/or a size of a resource selection window used to generate a resource set and/or a set of indicatable resources and/or the number of resources that can be indicated by each resource indicator set (e.g., the number of sub-channels is equal to or greater than a (pre-)set value, or an appropriate value is indicated in a request signal, or the UE determines an appropriate value), or the like. For example, the number of resource indicator sets that can be transmitted through the second SCI may be (pre-)set. For example, the number of resource indicator sets that can be transmitted through the second SCI may be set to the maximum number of supportable bits in the second SCI or to a maximum value that does not exceed the (pre-)set number of bits.

For example, a channel and/or signal including additional information transmitted by the UE-A may have a lower priority compared to other data transmissions of the UE-A. For example, the channel and/or signal including the additional information transmitted by the UE-A may have a lower priority than other RAT (e.g., LTE) SL transmission and/or reception of the UE-A. For example, the channel and/or signal including the additional information transmitted by the UE-A may have a lower priority than other LINKs (e.g., UL and/or DL) of the UE-A.

For example, a priority value of the channel and/or signal including the additional information transmitted by the UE-A may be set to 0. For example, the priority value may be 0 only when the additional information is transmitted via MAC CE. For example, a priority value of a channel and/or signal including additional information request transmitted by the UE-B may be set to 0. For example, the priority value may be 0 only when the additional information request is transmitted via MAC CE.

When the UE-A provides the UE-B with information on preferred and/or non-preferred resources for UE-B's transmission, an indicator for the resource location may be based on a transmission time of additional information including the resource information. In the above example, a transmission resource pool to which a slot, in which the additional information is transmitted, belongs may be different from a transmission resource pool to which the preferred and/or non-preferred resources belong.

For example, at least one of i) information on a start time and/or an end time of a resource selection window for preferred and/or non-preferred resources, ii) a reference time location for preferred/non-preferred resource indicators, and/or iii) a location of a sensing window for preferred/non-preferred resource generation may be determined based on the earliest slot among slots belonging to a transmission resource pool for subsequent preferred and/or non-preferred resources, by including a slot in which the additional information is transmitted. In other words, the earliest slot may be based on one of slots at a time after transmission of the additional information. The slots at the time after the transmission of the additional information may include a slot in which the additional information is transmitted. That is, the earliest slot is a slot at the time after the transmission of the additional information.

For example, at least one of i) information on a start time and/or an end time of a resource selection window for preferred and/or non-preferred resources, ii) a reference time location for preferred/non-preferred resource indicators, and/or iii) a location of a sensing window for preferred/non-preferred resource generation may be determined based on the earliest slot among slots belonging to a transmission resource pool for subsequent preferred and/or non-preferred resources, by including a slot, in which the UE-B transmits a request for additional information, or the slot. In other words, the earliest slot may be based on one of slots at a time after the UE-B transmits the request for additional information. The slots at the time after the UE-B transmits the request for additional information may include a slot in which the request for additional information is transmitted. That is, the earliest slot is a slot at the time after the request for additional information is transmitted.

For example, at least one of i) information on a start time and/or an end time of a resource selection window for preferred and/or non-preferred resources, ii) a reference time location for preferred/non-preferred resource indicators, and/or iii) a location of a sensing window for preferred/non-preferred resource generation may be determined based on the earliest slot among slots belonging to a transmission resource pool for subsequent preferred and/or non-preferred resources, by including a time (e.g., slot) at which the UE-A determines that event/condition for transmission of additional information is satisfied, or the slot. In other words, the earliest slot may be based on one of slots after the UE-A determines that the event/condition for transmission of additional information is satisfied. The slots after the UE-A determines that the event/condition for transmission of additional information is satisfied may include a slot in which the UE-A determines that the event/condition for transmission of additional information is satisfied. That is, the earliest slot is a slot at a time after it is determined that the event/condition is satisfied.

For example, at least one of i) information on a start time and/or an end time of a resource selection window for preferred and/or non-preferred resources, ii) a reference time location for preferred/non-preferred resource indicators, and/or iii) a location of a sensing window for preferred/non-preferred resource generation may be determined based on the earliest slot among slots belonging to a transmission resource pool for subsequent preferred and/or non-preferred resources, by including a time (e.g., slot) at which the UE-A triggers a resource (re)selection for additional information transmission, or the slot. In other words, the earliest slot may be based on one of slots after the UE-A triggers the resource (re)selection for the additional information transmission. The slots after the UE-A triggers the resource (re)selection for the additional information transmission may include a slot in which the UE-A triggers the resource (re)selection for the additional information transmission. That is, the earliest slot is a slot at a time after the resource (re)selection is triggered.

For example, at least one of i) information on a start time and/or an end time of a resource selection window for preferred and/or non-preferred resources, ii) a reference time location for preferred/non-preferred resource indicators, and/or iii) a location of a sensing window for preferred/non-preferred resource generation may be determined based on the earliest slot among slots belonging to a transmission resource pool for subsequent preferred and/or non-preferred resources, by including a starting location (e.g., slot) of a resource selection window for additional information transmission of the UE-A or the slot. In other words, the earliest slot may be based on one of slots after the starting location of the resource selection window for additional information transmission of the UE-A. The slots after the starting location of the resource selection window for additional information transmission of the UE-A may include a slot corresponding to the starting location of the resource selection window for additional information transmission of the UE-A. That is, the earliest slot is a slot at a time after the starting location of the resource selection window.

For example, the UE-A may transmit additional information after time based on the following i) and/or ii) from a slot receiving the additional information request from the UE-B.

i) K value (e.g., minimum timing value for PSCCH-to-PSFCH configured to a resource pool)
ii) T_proc, 1 or T_1 multiplied by 2

For example, in the above example, 2*T_proc, 1 or T_1 may include a time at which the UE-A performs resource (re)selection for additional information generation and a time at which the UE-A performs resource (re)selection for additional information transmission. T_proc,1 may denote an upper limit value of T_1 related to a starting location of a resource selection window (n+T_1~ n+T_2).

For example, the UE-A may transmit the additional information after a value obtained by multiplying T_proc,1 or T_1 by 2 from a slot in which event achievement for an additional information transmission trigger is determined. Time at which the additional information can be transmitted may be determined based on time for a factor corresponding to the event (e.g. SCI reception). For example, the UE-A may transmit the additional information after time based on the following i) and/or ii) from a slot in which SCI corresponding to the event for the additional information transmission trigger is received.

    i) K value (e.g., minimum timing value for PSCCH-to-PSFCH configured to a resource pool)
    ii) T_proc, 1 or T_1 multiplied by 2

In an embodiment of the present disclosure, in order for the UE-A to determine a location, at which the additional information can be transmitted, based on a slot location of PSCCH and/or PSSCH received from the UE-B or a third UE, the K value determined based on PSSCH-to-PSFCH timing from a transmission slot of the PSCCH and/or PSSCH is applied. The K value is an example, and a K value determined differently from this may be applied. For example, the K value may be set to be smaller than the PSSCH-to-PSFCH timing based on a processing time required for the additional information transmission triggering. For example, a value for the K may be T_proc,0 or T_proc,0+ 1 (slot). The T_proc,0 may denote a processing time for a sensing result of the UE. For example, the resource (re)selection of the UE may be triggered after the T_Proc,0 from time at which a window, on which the UE performs the sensing, ends (an end point of the sensing window). That is, the end point of the sensing window may be time (n-T_Proc,0) before T_proc,0 from a slot 'n' in which the resource (re)selection is triggered.

In an embodiment of the present disclosure, the UE may perform the resource selection and/or transmit the additional information based on Table 12 below.

[Table 12]

| **8.1.4 UE procedure for determining the subset of resources to be reported to higher layers in PSSCH resource selection in sidelink resource allocation mode 2** |
|---|
| In resource allocation mode 2, the higher layer can request the UE to determine a subset of resources from which the higher layer will select resources for PSSCH/PSCCH transmission. To trigger this procedure, in slot *n*, the higher layer provides the following parameters for this PSSCH/PSCCH transmission: |
|       - the resource pool from which the resources are to be reported; |
|       - L1 priority, $prio_{TX}$; |
|       - the remaining packet delay budget; |
|       - the number of sub-channels to be used for the PSSCH/PSCCH transmission in a slot, $L_{subCH}$; |
|       - optionally, the resource reservation interval, $P_{rsvp\_TX}$, in units of msec. |
|       - if the higher layer requests the UE to determine a subset of resources from which the higher layer will select resources for PSSCH/PSCCH transmission as part of re-evaluation or pre-emption procedure, the higher layer provides a set of resources ($r_0$, $r_1$, $r_2$, ...) which may be subject to re-evaluation and a set of resources $(r_0', r_1', r_2', ...)$ which may be subject to pre-emption. |
|       - it is up to UE implementation to determine the subset of resources as requested by higher layers before or after the slot $r_i'' - T_3$, where $r_i''$ is the slot with the smallest slot index among ($r_0$, $r_1$, $r_2$, ... ) and $(r_0', r_1', r_2', ...)$, and $T_3$ is equal to $T_{proc,1}^{SL}$, where $T_{proc,1}^{SL}$ is defined in slots in Table 8.1.4-2 where $\mu_{SL}$ is the SCS configuration of the SL BWP. |
| The following higher layer parameters affect this procedure: |
|       - *sl-SelectionWindowList*: internal parameter $T_{2min}$ is set to the corresponding value from higher layer parameter *sl-SelectionWindowList* for the given value of $prio_{TX}$. |

(continued)

| |
| --- |
| **8.1.4 UE procedure for determining the subset of resources to be reported to higher layers in PSSCH resource selection in sidelink resource allocation mode 2**<br><br>- *sl-Thres-RSRP-List*: this higher layer parameter provides an RSRP threshold for each combination ($p_i$, $p_j$), where $p_i$ is the value of the priority field in a received SCI format 1-A and $p_j$ is the priority of the transmission of the UE selecting resources; for a given invocation of this procedure, $p_j = prio_{TX}$.<br>- *sl-RS-ForSensing* selects if the UE uses the PSSCH-RSRP or PSCCH-RSRP measurement, as defined in clause 8.4.2.1.<br>- *sl-ResourceReservePeriodList*<br>- *sl-SensingWindow*: internal parameter $T_0$ is defined as the number of slots corresponding to *sl-SensingWindow* msec<br>- *sl-TxPercentageList*: internal parameter $X$ for a given $prio_{TX}$ is defined as *sl-TxPercentageList* ($prio_{TX}$) converted from percentage to ratio<br>- *sl-PreemptionEnable*: if *sl-PreemptionEnable* is provided, and if it is not equal to 'enabled', internal parameter $prio_{pre}$ is set to the higher layer provided parameter *sl-PreemptionEnable* |

| |
| --- |
| The resource reservation interval, $P_{rsvp\_TX}$, if provided, is converted from units of msec to units of logical slots, resulting in $P'_{rsvp\_TX}$ according to clause 8.1.7.<br><br>Notation: $\left(t'^{SL}_0, t'^{SL}_1, t'^{SL}_2, ...\right)$<br>denotes the set of slots which belongs to the sidelink resource pool and is defined in Clause 8.<br>The following steps are used:<br><br>1) A candidate single-slot resource for transmission $R_{x,y}$ is defined as a set of $L_{subCH}$ contiguous sub-channels with sub-channel $x+j$ in slot $t'^{SL}_y$ where $j = 0,...,L_{subCH} - 1$. The UE shall assume that any set of $L_{subCH}$ contiguous sub-channels included in the corresponding resource pool within the time interval [$n + T_1, n + T_2$] correspond to one candidate single-slot resource, where<br><br>- selection of $T_1$ is up to UE implementation under $0 \leq T_1 \leq T^{SL}_{proc,1}$, where $T^{SL}_{proc,1}$ is defined in slots in Table 8.1.4-2 where $\mu_{SL}$ is the SCS configuration of the SL BWP;<br>- if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).<br>The total number of candidate single-slot resources is denoted by $M_{total}$. |

(continued)

The resource reservation interval, $P_{rsvp\_TX}$, if provided, is converted from units of msec to units of logical slots, resulting in $P'_{rsvp\_TX}$ according to clause 8.1.7.

2) The sensing window is defined by the range of slots $[n - T_0, n - T^{SL}_{proc,0})$ where $T_0$ is defined above and $T^{SL}_{proc,0}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots.

3) The internal parameter $Th(p_i,p_j)$ is set to the corresponding value of RSRP threshold indicated by the i-th field in *sl-Thres-RSRP-List*, where $i = p_i + (p_j - 1) * 8$.

4) The set $S_A$ is initialized to the set of all the candidate single-slot resources.

5) The UE shall exclude any candidate single-slot resource $R_{x,y}$ from the set $S_A$ if it meets all the following conditions:

- the UE has not monitored slot $t'^{SL}_m$ in Step 2.
- for any periodicity value allowed by the higher layer parameter *sl-ResourceReservePeriodList* and a hypothetical SCI format 1-A received in slot $t'^{SL}_m$ with '*Resource reservation period*' field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot $t'^{SL}_m$, and '*Resource reservation period*' field, if present, and '*Priority*' field in the received SCI format 1-A indicate the values $P_{rsvp\_RX}$ and $prio_{RX}$, respectively according to Clause 16.4 in [6, TS 38.213];

b) the RSRP measurement performed, according to clause 8.4.2.1 for the received SCI format 1-A, is higher than $Th(prio_{RX}, prio_{TX})$;

c) the SCI format received in slot $t'^{SL}_m$ or the same SCI format which, if and only if the '*Resource reservation period*' field is present in the received SCI format 1-A, is assumed to be received in slot(s) $t'^{SL}_{m+q \times P'_{rsvp\_RX}}$ determines according to clause 8.1.5 the set of resource blocks and slots which overlaps with $R_{x,y+j \times P'_{rsvp\ TX}}$ for q=1, 2, ..., Q and j=0, 1,

..., $C_{resel} - 1$. Here, $P'_{rsvp\_RX}$ is $P_{rsvp\_RX}$ converted to units of logical slots according to clause 8.1.7, $Q = \left\lceil \frac{T_{scal}}{P_{rsvp\_RX}} \right\rceil$ if $P_{rsvp\_RX} < T_{scal}$ and $n' - m \leq P'_{rsvp\_RX}$, where $t'^{SL}_{n'} = n$ if slot $n$ belongs to the set $\left( t'^{SL}_0, t'^{SL}_1, \ldots, t'^{SL}_{T'_{max}-1} \right)$, otherwise slot $t'^{SL}_{n'}$ is the first slot after slot $n$ belonging to the set $\left( t'^{SL}_0, t'^{SL}_1, \ldots, t'^{SL}_{T'_{max}-1} \right)$; otherwise $Q = 1$. $T_{scal}$ is set to selection window size $T_2$ converted to units of msec.

7) If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4.

The UE shall report set $S_A$ to higher layers.
If a resource $r_i$ from the set $(r_0, r_1, r_2, \ldots)$ is not a member of $S_A$, then the UE shall report re-evaluation of the resource $r_i$ to higher layers.
If a resource $r'_i$ from the set $(r'_0, r'_1, r'_2, \ldots)$ meets the conditions below then the UE shall report pre-emption of the resource $r'_i$ to higher layers

- $r'_i$ is not a member of $S_A$, and

- $r'_i$ meets the conditions for exclusion in step 6, with $Th(prio_{RX}, prio_{TX})$ set to the final threshold after executing steps 1)-7), i.e. including all necessary increments for reaching $X \cdot M_{total}$, and

- the associated priority $prio_{RX}$, satisfies one of the following conditions:

  - sl-PreemptionEnable is provided and is equal to 'enabled' and $prio_{TX} > prio_{RX}$

  - sl-PreemptionEnable is provided and is not equal to 'enabled', and $prio_{RX} < prio_{pre}$ and $prio_{TX} > prio_{RX}$

**Table 8.1.4-1: $T^{SL}_{proc,0}$ depending on sub-carrier spacing**

| $\mu_{SL}$ | $T^{SL}_{proc,0}$ [slots] |
|---|---|
| 0 | 1 |
| 1 | 1 |
| 2 | 2 |
| 3 | 4 |

**Table 8.1.4-2: $T_{proc,1}^{SL}$ depending on sub-carrier spacing**

| $\mu_{SL}$ | $T_{proc,1}^{SL}$ [slots] |
|---|---|
| 0 | 3 |
| 1 | 5 |
| 2 | 9 |
| 3 | 17 |

For example, the additional information that can be used for the resource (re)selection of the UE-B may be additional information that is received before a pre-defined time. Specifically, the additional information that can be used for the resource (re)selection of the UE-B may be limited to information received before a specific time duration based on an end time determined based on a packet delay budget (PDB) of the UE-B corresponding to the resource (re)selection. For example, the specific time duration may include at least one of the following i) to vi).

i) PSSCH decoding processing time,
ii) (minimum) PSSCH-to-PSFCH timing (e.g., in the form of the (pre-)set number of logical slots),
iii) T_proc,0,
iv) T_proc, 1,
v) T_1 (e.g., slot offset between the start of the resource selection window and the time of resource (re)selection triggering of the UE-B), and/or
vi) (pre-)configured time offset value (e.g., in the form of the number of physical or logical slots or msec form)

For example, the additional information that can be used for the resource (re)selection of the UE-B may be limited to information received before a specific time duration based on the end time of the resource selection window corresponding to the resource (re)selection. For example, the specific time duration may include at least one of the above i) to vi).

In an embodiment of the present disclosure, the additional information transmission may be limited to that triggered by the additional information request of the UE-B.

For example, the additional information that can be used for the resource (re)selection of the UE-B may be limited to information received before a specific time duration based on the start time of the resource selection window corresponding to the resource (re)selection. For example, the specific time duration may include at least one of the above i) to vi).

In an embodiment of the present disclosure, the additional information transmission may be limited to that triggered by UE-A's determination when a specific condition is satisfied without the additional information request of the UE-B.

For example, only if all the UEs for transmission and/or reception resource pools support or are supporting the transmission and/or reception of additional information, the UE may be allowed to perform resource (re)selection based on only preferred resources of the additional information. For example, only if all the UEs for the transmission and/or reception resource pools is (pre-)configured or configured via PC5-RRC to perform the resource (re)selection based on only the preferred resources, a (re)selection process based on only a set of preferred resources may be allowed.

For example, if a UE for transmission and/or reception resource pools performs resource (re)selection based on only preferred resources of the additional information, the UE may expect that all or some of UEs of the same resource pool perform resource (re)selection using the additional information. For example, if a UE for transmission and/or reception resource pools performs resource (re)selection based on only preferred resources of the additional information, the UE may expect that all or some of UEs of the same resource pool perform resource (re)selection based on only preferred resources of the additional information.

For example, if additional information is transmitted from the UE-A to the UE-B through the second SCI, the UE-B may determine whether to use the additional information for resource (re)selection based on L1-SOURCE ID and/or L1-DESTINATION ID. For example, in the above situation, it may be assumed that the UE-B uses the additional information obtained from the second SCI for the resource (re)selection. In this instance, if remaining SOURCE ID and/or remaining DESTINATION ID obtained after decoding the TB scheduled to the second SCI do not match an ID that the UE-B expects to receive, the UE-B may cancel use of the additional information. For example, canceling the use of the additional information may mean not reporting the preferred resource provided in the additional information from a physical layer end of the UE-B to the upper layer. For example, canceling the use of the additional information may mean ignoring the preferred resource provided in the additional information at the physical layer end of the UE-B.

For example, if additional information request is transmitted from the UE-B to the UE-A through the second SCI, the UE-A may determine whether to transmit additional information for the additional information request to the UE-B based on L1-SOURCE ID and/or L1-DESTINATION ID. For example, in the above situation, it may be assumed that the UE-A generates the additional information based on the additional information request obtained from the second SCI. In this instance, if remaining SOURCE ID and/or remaining DESTINATION ID obtained after decoding the TB scheduled to the second SCI do not match an ID that the UE-A expects to receive, the UE-A may ignore the additional information request. For example, ignoring the additional information request may include the UE-A stopping the additional information generation process. For example, ignoring the additional information request may mean canceling transmission of the additional information before transmitting the additional information generated by the UE-A and/or before the processing time from the scheduled transmission time.

For example, SOURCE ID and/or DESTINATION ID for the additional information transmission and/or a combination thereof may be randomly selected, by the UE-A, among SOURCE IDs and/or DESTINATION IDs available by the UE-A and/or combinations thereof. For example, the additional information transmission may not be triggered based on a request, and may be a case where the UE-A determines the additional information transmission when a specific condition is satisfied. For example, the DESTINATION ID for the additional information transmission may be configured to be the same as DESTINATION ID of the additional information request. That is, in this case, a cast type related to the additional information transmission and transmission of the additional information request may be a group cast or a broadcast.

For example, SOURCE ID and/or DESTINATION ID for the additional information request transmission and/or a combination thereof may be randomly selected, by the UE-B, among SOURCE IDs and/or DESTINATION IDs available by the UE-B and/or combinations thereof. For example, SOURCE IDs and/or DESTINATION IDs available at the UE-B end may be limited to unicast.

For example, if additional information is transmitted via MAC CE, a second SCI format that can be used for additional information transmission may be used for a TB including the MAC CE. For example, in the above, a value of all or part of a field corresponding to the additional information in the second SCI format may be set to a specific value (e.g., 0). For example, if the UE-B receives the second SCI that can be used for the additional information transmission, the UE-B may attempt to decode the TB transmitted through PSSCH regardless of whether SOURCE ID and/or DESTINATION ID are matched. For example, in the above, only if the second SCI indicates non-preferred resources and/or includes non-preferred resources corresponding to TB reception resources of the UE-A, the UE-B may attempt the TB decoding.

For example, a priority of a PSFCH used for additional information transmission may be a minimum value among priority values of all or some of PSSCH resources that cause a resource conflict corresponding to additional information. For example, the priority of the PSFCH used for the additional information transmission may be a maximum value among the priority values of all or some of the PSSCH resources that cause the resource conflict corresponding to the additional information. For example, the priority value of the PSSCH resource may be a priority value indicated by SCI used to reserve the PSSCH resource. For example, in the above example, the PSSCH resource causing the resource conflict may utilize the maximum priority value or the minimum priority value only for the PSSCH requesting a resource conflict indicator. For example, the priority value of the PSFCH used for the additional information transmission may be (pre-)configured again based on i) a (pre-)set value or ii) a priority value of the PSSCH resource causing the resource conflict. For example, when the priority value is (pre-) configured, a configurable value may include zero. For example, when the priority value is (pre-) configured, the configurable value may include nine. For example, when the priority value is (pre-) configured, the configurable value may include the same value as a minimum priority value or a maximum priority value of all or some of the PSSCH resources causing the resource conflict. In an embodiment of the present disclosure, the priority of the PSFCH may be a priority value referenced upon the PSFCH transmission.

For example, the priority value of the PSFCH used for the additional information transmission may be (pre-)configured as i) a (pre-)set value or ii) a priority value indicated by SCI of the UE-B to receive additional information. For example, when the priority value is (pre-) configured, a configurable value may include zero. For example, when the priority value is (pre-) configured, the configurable value may include a value set to be the same as the priority value indicated by the SCI of the UE-B to receive the additional information. In an embodiment of the present disclosure, the priority of the PSFCH may be a priority value referenced upon the PSFCH reception.

Various embodiments of the present disclosure can be mutually combined.

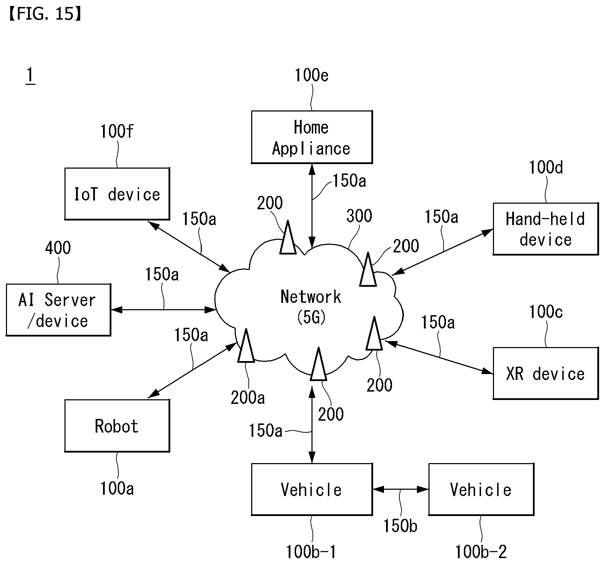

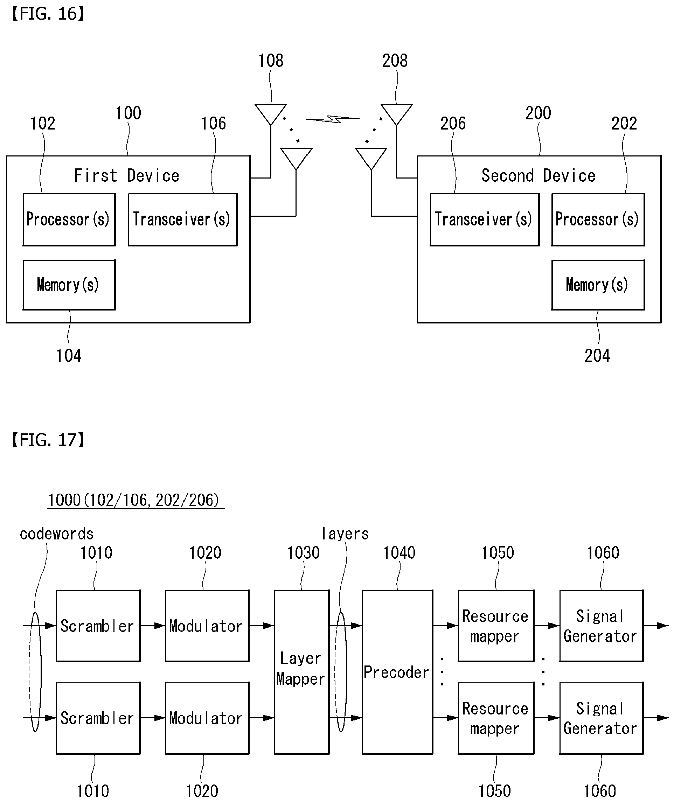

From an implementation perspective, operations (e.g., operations related to inter-UE coordination information) of the first UE (UE-A)/second UE (UE-B) according to the above-described embodiments may be processed by a device (e.g., processors 102 and 202 of FIG. 16) of FIGS. 15 to 20 to be described later.

Further, operations (e.g., operations related to inter-UE coordination information) of the first UE (UE-A)/second UE (UE-B) according to the above-described embodiments may be stored in a memory (e.g., memories 104 and 204 of FIG. 16) in the form of commands/programs (e.g., instructions, executable codes) for running at least one processor (e.g., processors 102 and 202 of FIG. 16).

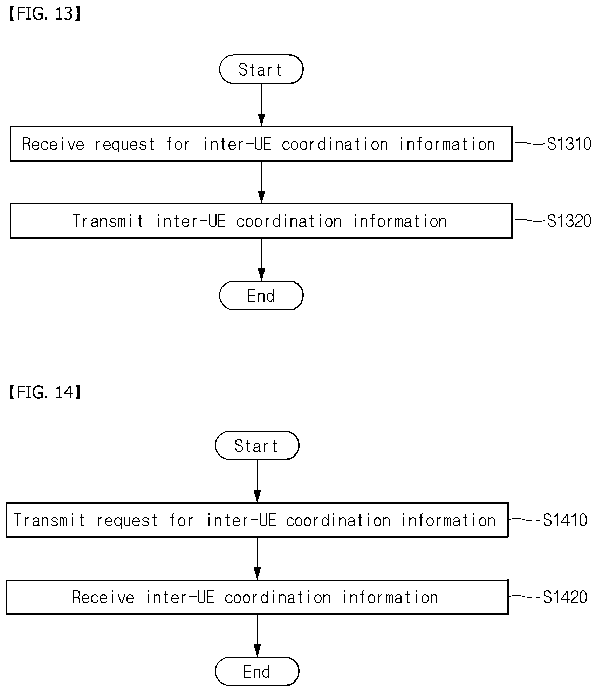

Below, the above-described embodiments are described in detail from a perspective of an operation of the first UE with reference to FIG. 13. Methods to be described below are merely distinguished for convenience of explanation. Thus, as long as the methods are not mutually exclusive, it is obvious that partial configuration of any method can be substituted or combined with partial configuration of another method.

FIG. 13 is a flow chart illustrating a method for a first UE to transmit inter-UE coordination information in a wireless communication system according to an embodiment of the present disclosure.

Referring to FIG. 13, a method for a first UE to transmit inter-UE coordination information in a wireless communication system according to an embodiment of the present disclosure may include a step S1310 of receiving a request for the inter-UE coordination information and a step S1320 of transmitting the inter-UE coordination information.

In the following description, the first UE may mean the UE-A of FIG. 12, and a second UE may mean the UE-B of FIG. 12. For example, the first UE may be a UE transmitting coordination information to the second UE, and the second UE may be a UE receiving the coordination information from the first UE. In the following description, the inter-UE coordination information may mean coordination information, additional information, or assistance information in the above-described embodiments.

In the step S1310, the first UE receives a request for the inter-UE coordination information from the second UE.

According to an embodiment, the request may be received based on a first ID. The first ID may include a first SOURCE ID and a first DESTINATION ID. For example, the first SOURCE ID may include a first Layer 1 SOURCE ID (first L1 SOURCE ID) and/or a first Layer 2 SOURCE ID (first L2 SOURCE ID). For example, the first DESTINATION ID may include a first Layer 1 DESTINATION ID (first L1 DESTINATION ID) and/or a first Layer 2 DESTINATION ID (first L2 DESTINATION ID).

The inter-UE coordination information may be transmitted based on a second ID. The second ID may include a second SOURCE ID and a second DESTINATION ID.

In the present disclosure, the request for the inter-UE coordination information being received (or transmitted) based on the first ID may mean that a field (e.g., Source ID field of second SCI and/or SRC field of MAC subheader) representing a SOURCE ID related to the request is set to the first SOURCE ID, and a field (e.g., Destination ID field of second SCI and/or DST field of MAC subheader) representing a DESTINATION ID related to the request is set to the first DESTINATION ID. In other words, the request may include a Source ID field set to the first SOURCE ID and a Destination ID field set to the first DESTINATION ID (e.g., second SCI). Alternatively, the request may be transmitted together with the SOURCE/DESTINATION fields (e.g., MAC-CE with MAC subheader in MAC PDU).

In the present disclosure, the inter-UE coordination information being transmitted (or received) based on the second ID may mean that a field (e.g., Source ID field of second SCI and/or SRC field of MAC subheader) representing the SOURCE ID included in the request and a field (e.g., Destination ID field of second SCI and/or DST field of MAC subheader) representing the DESTINATION ID included in the request are set to the second SOURCE ID and the second DESTINATION ID, respectively. In other words, the inter-UE coordination information may include a Source ID field set to the second SOURCE ID and a Destination ID field set to the second DESTINATION ID (e.g., second SCI). Alternatively, the inter-UE coordination information may be transmitted together with the SOURCE/DESTINATION fields (e.g., MAC-CE with MAC subheader in MAC PDU).

According to an embodiment, at least one of the first SOURCE ID, the first DESTINATION ID, the second SOURCE ID, or the second DESTINATION ID may be set to a pre-defined ID.

For example, based on a cast type related to a transmission of the request being a unicast, the first SOURCE ID and the first DESTINATION ID may be set to a third SOURCE ID and a third DESTINATION ID.

The third SOURCE ID and the third DESTINATION ID may be determined among pre-defined SOURCE IDs and DESTINATION IDs for the transmission of the request.

In this instance, the second SOURCE ID may be set to the first DESTINATION ID, and the second DESTINATION ID may be set to the first SOURCE ID.

According to an embodiment, based on the request being multiplexed together with data and received, the first DESTINATION ID may be configured to be the same as a DESTINATION ID related to a transmission of the data. That is, based on a pair of the SOURCE ID and the DESTINATION ID being the same, the request and the data (of the second UE) may be multiplexed and received in one transport block (TB).

According to the step S1310, an operation of the first UE (100/200 of FIGS. 15 to 20) to receive the request for the inter-UE coordination information from the second UE (100/200 of FIGS. 15 to 20) may be implemented by a device of FIGS. 15 to 20. For example, referring to FIG. 16, one or more processors 102 may control one or more transceivers 106 and/or one or more memories 104 so as to receive the request for the inter-UE coordination information from the second UE 200.

In the step S1320, the first UE transmits the inter-UE coordination information to the second UE. In this instance.

A transmission of the inter-UE coordination information may be triggered by the request or other condition than the request. For example, the first UE may transmit the inter-UE coordination information to the second UE based on the request. For example, the first UE may transmit the inter-UE coordination information to the second UE based on the other condition than the request. The other condition than the request may be pre-configured or configured by a base station. In other words, the transmission of the inter-UE coordination information may include a transmission of the inter-UE coordination information triggered by the request and/or a transmission of the inter-UE coordination information triggered by the other condition than the request.

The inter-UE coordination information may be transmitted through a physical sidelink shared channel (PSSCH). For example, the inter-UE coordination information may be transmitted based on a second stage SCI and/or a medium access control-control element (MAC-CE). For example, the inter-UE coordination information may be included in the second stage SCI. The first UE may transmit the second stage SCI to the second UE. For example, the inter-UE coordination information may be included in the MAC-CE (e.g., inter-UE coordination information MAC CE). The first UE may transmit the MAC-CE to the second UE.

According to an embodiment, the inter-UE coordination information may be transmitted based on a second ID. The second ID may include a second SOURCE ID and a second DESTINATION ID. For example, the second SOURCE ID may include a second Layer 1 SOURCE ID (second L1 SOURCE ID) and/or a second Layer 2 SOURCE ID (second L2 SOURCE ID). For example, the second DESTINATION ID may include a second Layer 1 DESTINATION ID (second L1 DESTINATION ID) and/or a second Layer 2 DESTINATION ID (second L2 DESTINATION ID).

According to an embodiment, at least one of the first SOURCE ID, the first DESTINATION ID, the second SOURCE ID, or the second DESTINATION ID may be set to a pre-defined ID.

According to an embodiment, based on the cast type related to the transmission of the request being a groupcast or a broadcast, the second DESTINATION ID may be set to the first DESTINATION ID. That is, to improve the availability of the inter-UE coordination information, the DESTINATION ID for the transmission of the inter-UE coordination information may be configured to be the same as the DESTINATION ID for the transmission of the request.

According to an embodiment, based on the transmission of the inter-UE coordination information being triggered by the other condition than the request, the second SOURCE ID and the second DESTINATION ID may be set to a fourth SOURCE ID and a fourth DESTINATION ID. The fourth SOURCE ID and the fourth DESTINATION ID may be determined among pre-defined SOURCE IDs and DESTINATION IDs for the transmission of the inter-UE coordination information.

According to an embodiment, based on the inter-UE coordination information being multiplexed together with data and transmitted, the second DESTINATION ID may be configured to be the same as a DESTINATION ID related to a transmission of the data. That is, based on a pair of the SOURCE ID and the DESTINATION ID being the same, the inter-UE coordination information and the data (of the first UE) may be multiplexed and received in one transport block (TB).

According to the step S 1320, an operation of the first UE (100/200 of FIGS. 15 to 20) to transmit the inter-UE coordination information to the second UE (100/200 of FIGS. 15 to 20) may be implemented by the device of FIGS. 15 to 20. For example, referring to FIG. 16, one or more processors 102 may control one or more transceivers 106 and/or one or more memories 104 so as to transmit the inter-UE coordination information to the second UE 200.

Below, the above-described embodiments are described in detail from a perspective of an operation of the second UE with reference to FIG. 14. Methods to be described below are merely distinguished for convenience of explanation. Thus, as long as the methods are not mutually exclusive, it is obvious that partial configuration of any method can be substituted or combined with partial configuration of another method.

FIG. 14 is a flow chart illustrating a method for a second UE to receive inter-UE coordination information in a wireless communication system according to another embodiment of the present disclosure.

Referring to FIG. 14, a method for a second UE to receive inter-UE coordination information in a wireless communication system according to another embodiment of the present disclosure may include a step S1410 of transmitting a request for the inter-UE coordination information and a step S 1420 of receiving the inter-UE coordination information.

In the following description, the first UE may mean the UE-A of FIG. 12, and a second UE may mean the UE-B of FIG. 12. For example, the first UE may be a UE transmitting coordination information to the second UE, and the second UE may be a UE receiving the coordination information from the first UE. In the following description, the inter-UE coordination information may mean coordination information, additional information, or assistance information in the above-described embodiments.

In the step S1410, the second UE transmits a request for the inter-UE coordination information to the first UE.

According to an embodiment, the request may be received based on a first ID. The first ID may include a first SOURCE ID and a first DESTINATION ID. For example, the first SOURCE ID may include a first Layer 1 SOURCE ID (first L1 SOURCE ID) and/or a first Layer 2 SOURCE ID (first L2 SOURCE ID). For example, the first DESTINATION ID may include a first Layer 1 DESTINATION ID (first L1 DESTINATION ID) and/or a first Layer 2 DESTINATION ID (first L2 DESTINATION ID).

The inter-UE coordination information may be received based on a second ID. The second ID may include a second SOURCE ID and a second DESTINATION ID.

In the present disclosure, the request for the inter-UE coordination information being received (or transmitted) based on the first ID may mean that a field (e.g., Source ID field of second SCI and/or SRC field of MAC subheader) representing a SOURCE ID related to the request is set to the first SOURCE ID, and a field (e.g., Destination ID field of second SCI and/or DST field of MAC subheader) representing a DESTINATION ID related to the request is set to the first DESTINATION ID. In other words, the request may include a Source ID field set to the first SOURCE ID and a Destination ID field set to the first DESTINATION ID (e.g., second SCI). Alternatively, the request may be transmitted together with the SOURCE/DESTINATION fields (e.g., MAC-CE with MAC subheader in MAC PDU).

In the present disclosure, the inter-UE coordination information being transmitted (or received) based on the second ID may mean that a field (e.g., Source ID field of second SCI and/or SRC field of MAC subheader) representing the SOURCE ID included in the request and a field (e.g., Destination ID field of second SCI and/or DST field of MAC subheader) representing the DESTINATION ID included in the request are set to the second SOURCE ID and the second DESTINATION ID, respectively. In other words, the inter-UE coordination information may include a Source ID field set to the second SOURCE ID and a Destination ID field set to the second DESTINATION ID (e.g., second SCI). Alternatively, the inter-UE coordination information may be transmitted together with the SOURCE/DESTINATION fields (e.g., MAC-CE with MAC subheader in MAC PDU).

According to an embodiment, at least one of the first SOURCE ID, the first DESTINATION ID, the second SOURCE ID, or the second DESTINATION ID may be set to a pre-defined ID.

For example, based on a cast type related to a transmission of the request being a unicast, the first SOURCE ID and the first DESTINATION ID may be set to a third SOURCE ID and a third DESTINATION ID.

The third SOURCE ID and the third DESTINATION ID may be determined among pre-defined SOURCE IDs and DESTINATION IDs for the transmission of the request.

In this instance, the second SOURCE ID may be set to the first DESTINATION ID, and the second DESTINATION ID may be set to the first SOURCE ID.

According to an embodiment, based on the request being multiplexed together with data and transmitted, the first DESTINATION ID may be configured to be the same as a DESTINATION ID related to a transmission of the data. That is, based on a pair of the SOURCE ID and the DESTINATION ID being the same, the request and the data (of the second UE) may be multiplexed and transmitted in one transport block (TB).

According to the step S 1410, an operation of the second UE (100/200 of FIGS. 15 to 20) to transmit the request for the inter-UE coordination information to the first UE (100/200 of FIGS. 15 to 20) may be implemented by a device of FIGS. 15 to 20. For example, referring to FIG. 16, one or more processors 102 may control one or more transceivers 106 and/or one or more memories 104 so as to transmit the request for the inter-UE coordination information to the first UE 100.

In the step S1420, the second UE receives the inter-UE coordination information from the first UE. In this instance. A transmission of the inter-UE coordination information may be triggered by the request or other condition than the request. For example, the first UE may transmit the inter-UE coordination information to the second UE based on the request. For example, the first UE may transmit the inter-UE coordination information to the second UE based on the other condition than the request. The other condition than the request may be pre-configured or configured by a base station. In other words, the transmission of the inter-UE coordination information may include a transmission of the inter-UE coordination information triggered by the request and/or a transmission of the inter-UE coordination information triggered by the other condition than the request.

The inter-UE coordination information may be transmitted through a physical sidelink shared channel (PSSCH). For example, the inter-UE coordination information may be transmitted based on a second stage SCI and/or a medium access control-control element (MAC-CE). For example, the inter-UE coordination information may be included in the second stage SCI. The second UE may receive the second stage SCI from the first UE. For example, the inter-UE coordination information may be included in the MAC-CE (e.g., inter-UE coordination information MAC CE). The second UE may receive the MAC-CE from the first UE.

According to an embodiment, the inter-UE coordination information may be received based on a second ID. The second ID may include a second SOURCE ID and a second DESTINATION ID. For example, the second SOURCE ID may include a second Layer 1 SOURCE ID (second L1 SOURCE ID) and/or a second Layer 2 SOURCE ID (second L2 SOURCE ID). For example, the second DESTINATION ID may include a second Layer 1 DESTINATION ID (second L1 DESTINATION ID) and/or a second Layer 2 DESTINATION ID (second L2 DESTINATION ID).

According to an embodiment, at least one of the first SOURCE ID, the first DESTINATION ID, the second SOURCE ID, or the second DESTINATION ID may be set to a pre-defined ID.

According to an embodiment, based on the cast type related to the transmission of the request being a groupcast or a broadcast, the second DESTINATION ID may be set to the first DESTINATION ID. That is, to improve the availability of the inter-UE coordination information, the DESTINATION ID for the transmission of the inter-UE coordination information may be configured to be the same as the DESTINATION ID for the transmission of the request.

According to an embodiment, based on the transmission of the inter-UE coordination information being triggered by the other condition than the request, the second SOURCE ID and the second DESTINATION ID may be set to a fourth SOURCE ID and a fourth DESTINATION ID. The fourth SOURCE ID and the fourth DESTINATION ID may be determined among pre-defined SOURCE IDs and DESTINATION IDs for the transmission of the inter-UE coordination information.

According to an embodiment, based on the inter-UE coordination information being multiplexed together with data and received, the second DESTINATION ID may be configured to be the same as a DESTINATION ID related to a transmission of the data. That is, based on a pair of the SOURCE ID and the DESTINATION ID being the same, the inter-UE coordination information and the data (of the first UE) may be multiplexed and received in one transport block (TB).

According to the step S 1420, an operation of the second UE (100/200 of FIGS. 15 to 20) to receive the inter-UE coordination information from the first UE (100/200 of FIGS. 15 to 20) may be implemented by the device of FIGS. 15 to 20. For example, referring to FIG. 16, one or more processors 102 may control one or more transceivers 106 and/or one or more memories 104 so as to receive the inter-UE coordination information from the first UE 100.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 15 illustrates a communication system 1 based on an embodiment of the present disclosure.

Referring to FIG. 15, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 16 illustrates wireless devices based on an embodiment of the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) based on the descriptions, functions, procedures, proposals, methods, and/or operational flowcharts disclosed in this document. The one or more processors 102 and 202 may generate messages, control information, data, or information based on the descriptions, functions, procedures, proposals, methods, and/or operational flowcharts disclosed in this document. The one or more processors 102 and 202 may generate signals (e.g., baseband signals) including PDUs, SDUs, messages, control information, data, or information based on the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information based on the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 17 illustrates a signal process circuit for a transmission signal based on an embodiment of the present disclosure.

Referring to FIG. 17, a signal processing circuit 1000 may include scramblers 1010, modulators 1020, a layer mapper 1030, a precoder 1040, resource mappers 1050, and signal generators 1060. An operation/function of FIG. 17 may be performed, without being limited to, the processors 102 and 202 and/or the transceivers 106 and 206 of FIG. 16. Hardware elements of FIG. 17 may be implemented by the processors 102 and 202 and/or the transceivers 106 and 206 of FIG. 16. For example, blocks 1010 to 1060 may be implemented by the processors 102 and 202 of FIG. 16. Alternatively, the blocks 1010 to 1050 may be implemented by the processors 102 and 202 of FIG. 16 and the block 1060 may be implemented by the transceivers 106 and 206 of FIG. 16.

Codewords may be converted into radio signals via the signal processing circuit 1000 of FIG. 17. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 17. For example, the wireless devices (e.g., 100 and 200 of FIG. 16) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

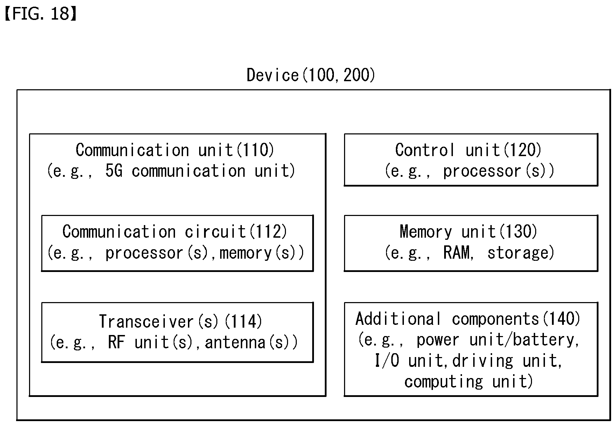

FIG. 18 illustrates another example of a wireless device based on an embodiment of the present disclosure. The wireless device may be implemented in various forms based on a use-case/service (refer to FIG. 15).

Referring to FIG. 18, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured based on types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place based on a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 18 will be described in detail with reference to the drawings.

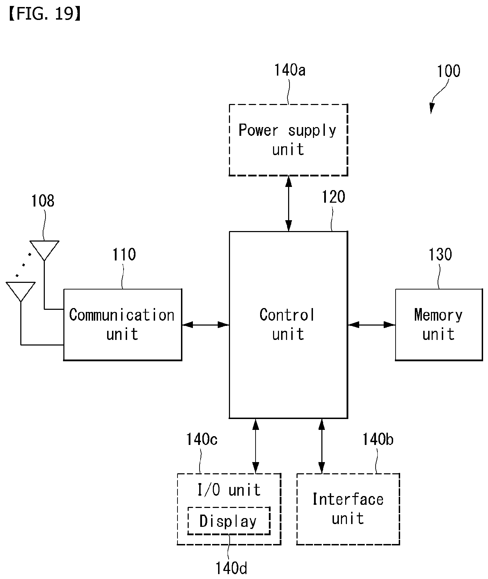

FIG. 19 illustrates a hand-held device based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 19, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 18, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

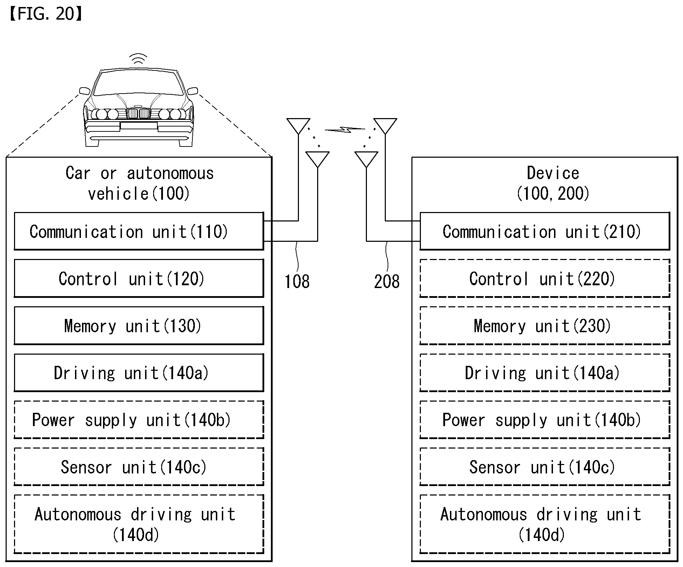

FIG. 20 illustrates a vehicle or an autonomous vehicle based on an embodiment of the present disclosure. The vehicle or autonomous vehicle may be implemented by a mobile robot, a car, a train, a manned/unmanned Aerial Vehicle (AV), a ship, etc.

Referring to FIG. 20, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path based on the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims described in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1. A method of a first user equipment (UE) for transmitting inter-UE coordination information in a wireless communication system, the method comprising:

   receiving, from a second UE, a request for the inter-UE coordination information; and
   transmitting the inter-UE coordination information to the second UE,
   wherein the request is received based on a first ID,
   wherein the inter-UE coordination information is transmitted based on a second ID,
   wherein the first ID includes a first SOURCE ID and a first DESTINATION ID,
   wherein the second ID includes a second SOURCE ID and a second DESTINATION ID, and
   wherein at least one of the first SOURCE ID, the first DESTINATION ID, the second SOURCE ID, or the second DESTINATION ID is set to a pre-defined ID.

2. The method of claim 1, wherein, based on a cast type related to a transmission of the request being a unicast, the first SOURCE ID and the first DESTINATION ID are set to a third SOURCE ID and a third DESTINATION ID.

3. The method of claim 2, wherein the third SOURCE ID and the third DESTINATION ID are determined among pre-defined SOURCE IDs and DESTINATION IDs for the transmission of the request.

4. The method of claim 2, wherein the second SOURCE ID is set to the first DESTINATION ID, and the second DESTINATION ID is set to the first SOURCE ID.

5. The method of claim 1, wherein, based on a cast type related to a transmission of the request being a groupcast or a broadcast, the second DESTINATION ID is set to the first DESTINATION ID.

6. The method of claim 1, wherein, based on a transmission of the inter-UE coordination information being triggered by other condition than the request, the second SOURCE ID and the second DESTINATION ID are set to a fourth SOURCE ID and a fourth DESTINATION ID.

7. The method of claim 6, wherein the fourth SOURCE ID and the fourth DESTINATION ID are determined among pre-defined SOURCE IDs and DESTINATION IDs for the transmission of the inter-UE coordination information.

8. The method of claim 1, wherein, based on the request being multiplexed together with data and received, the first DESTINATION ID is configured to be the same as a DESTINATION ID related to a transmission of the data.

9. The method of claim 1, wherein, based on the inter-UE coordination information being multiplexed together with data and transmitted, the second DESTINATION ID is configured to be the same as a DESTINATION ID related to a transmission of the data.

10. A first user equipment (UE) transmitting inter-UE coordination information in a wireless communication system, the first UE comprising:

    one or more transceivers;
    one or more processors configured to control the one or more transceivers; and
    one or more memories operably connected to the one or more processors,
    wherein the one or more memories are configured to store instructions performing operations based on being executed by the one or more processors,
    wherein the operations comprise:

       receiving, from a second UE, a request for the inter-UE coordination information; and
       transmitting the inter-UE coordination information to the second UE,
       wherein the request is received based on a first ID,
       wherein the inter-UE coordination information is transmitted based on a second ID,
       wherein the first ID includes a first SOURCE ID and a first DESTINATION ID,
       wherein the second ID includes a second SOURCE ID and a second DESTINATION ID, and
       wherein at least one of the first SOURCE ID, the first DESTINATION ID, the second SOURCE ID, or the second DESTINATION ID is set to a pre-defined ID.

**11.** A device controlling a first user equipment (UE) to transmit inter-UE coordination information in a wireless communication system, the device comprising:

one or more processors; and
one or more memories operably connected to the one or more processors,
wherein the one or more memories are configured to store instructions performing operations based on being executed by the one or more processors,
wherein the operations comprise:

receiving, from a second UE, a request for the inter-UE coordination information; and
transmitting the inter-UE coordination information to the second UE,
wherein the request is received based on a first ID,
wherein the inter-UE coordination information is transmitted based on a second ID,
wherein the first ID includes a first SOURCE ID and a first DESTINATION ID,
wherein the second ID includes a second SOURCE ID and a second DESTINATION ID, and
wherein at least one of the first SOURCE ID, the first DESTINATION ID, the second SOURCE ID, or the second DESTINATION ID is set to a pre-defined ID.

**12.** One or more non-transitory computer readable mediums storing one or more instructions,

wherein the one or more instructions perform operations based on being executed by one or more processors,
wherein the operations comprise:

receiving, from a second user equipment (UE), a request for inter-UE coordination information; and
transmitting the inter-UE coordination information to the second UE,
wherein the request is received based on a first ID,
wherein the inter-UE coordination information is transmitted based on a second ID,
wherein the first ID includes a first SOURCE ID and a first DESTINATION ID,
wherein the second ID includes a second SOURCE ID and a second DESTINATION ID, and
wherein at least one of the first SOURCE ID, the first DESTINATION ID, the second SOURCE ID, or the second DESTINATION ID is set to a pre-defined ID.

**13.** A method of a second user equipment (UE) for receiving inter-UE coordination information in a wireless communication system, the method comprising:

transmitting, to a first UE, a request for the inter-UE coordination information; and
receiving the inter-UE coordination information from the first UE,
wherein the request is transmitted based on a first ID,
wherein the inter-UE coordination information is received based on a second ID,
wherein the first ID includes a first SOURCE ID and a first DESTINATION ID,
wherein the second ID includes a second SOURCE ID and a second DESTINATION ID, and
wherein at least one of the first SOURCE ID, the first DESTINATION ID, the second SOURCE ID, or the second DESTINATION ID is set to a pre-defined ID.

**14.** A second user equipment (UE) receiving inter-UE coordination information in a wireless communication system, the second UE comprising:

one or more transceivers;
one or more processors configured to control the one or more transceivers; and
one or more memories operably connected to the one or more processors,
wherein the one or more memories are configured to store instructions performing operations based on being executed by the one or more processors,
wherein the operations comprise:

transmitting, to a first UE, a request for the inter-UE coordination information; and
receiving the inter-UE coordination information from the first UE,
wherein the request is transmitted based on a first ID,
wherein the inter-UE coordination information is received based on a second ID,

wherein the first ID includes a first SOURCE ID and a first DESTINATION ID,
wherein the second ID includes a second SOURCE ID and a second DESTINATION ID, and
wherein at least one of the first SOURCE ID, the first DESTINATION ID, the second SOURCE ID, or the second DESTINATION ID is set to a pre-defined ID.

【FIG. 1】

【FIG. 2】

【FIG. 3】

Resource Grid

A carrier
(up to 3300 subcarriers, i.e., 275 RBs)

A BWP

1RB=12 subcarriers

1 RE

1 subcarrier

1 symbol

l=0 · · ·

k=0

【FIG. 4】

BS(e.g.eNB or gNB)

UE 1 ←——————————————→ UE 2

【FIG. 5】

Frequency

| Unit<br>#($N_F$-1) | Unit<br>#($2N_F$-1) | ... | Unit<br>#($N_F*N_T$-1) | Unit<br>#($N_F$-1) |
|---|---|---|---|---|

⋮ ⋮

| Unit<br>#1 | Unit<br>#($N_F$+1) | ... | Unit<br>#($N_F*N_T-N_F$+1) | Unit<br>#1 |
| Unit<br>#0 | Unit<br>#$N_F$ | | Unit<br>#($N_F*N_T-N_F$) | Unit<br>#0 |

Time

D2D signal transmission
from a UE allocated
with unit#0

D2D signal transmission
from a UE allocated
with unit#0

【FIG. 6】

(a)

(b)

【FIG. 7】

● : Transmitting UE

▨ : Receiving UE

(a)

(b)

(c)

【FIG. 8】

Frequency

| BWP₃ 20MHz 60kHz |

BWP₁ 40MHz 15kHz

BWP₂ 10MHz 15kHz

BWP₂ 10MHz 15kHz

BWP₁ 40MHz 15kHz  ・・・

Time

【FIG. 9】

PRB N3

$N_{BWP,2}^{size}$

PRB 1
PRB 0

PRB N2

$N_{BWP,1}^{size}$

PRB 1
PRB 0

Carrier
Bandwidth

$N_{BWP,2}^{start}$

PRB N1

$N_{BWP,0}^{size}$

$N_{BWP,1}^{start}$

PRB 1
PRB 0

$N_{BWP,0}^{start}$

CRB 0

Frequency

PRB 0 (Point A) in
reference resource block

Time

【FIG. 10】

【FIG. 11】

Frequency

Time

: PSCCH

: PSSCH

【FIG. 12】

UE-A   UE-B

Assistance Information

S1200

【FIG. 13】

```
                    ( Start )
                        |
                        v
  +---------------------------------------------------+
  | Receive request for inter-UE coordination information |----S1310
  +---------------------------------------------------+
                        |
                        v
  +---------------------------------------------------+
  |      Transmit inter-UE coordination information      |----S1320
  +---------------------------------------------------+
                        |
                        v
                     ( End )
```

【FIG. 14】

```
                    ( Start )
                        |
                        v
  +----------------------------------------------------+
  | Transmit request for inter-UE coordination information |----S1410
  +----------------------------------------------------+
                        |
                        v
  +----------------------------------------------------+
  |      Receive inter-UE coordination information       |----S1420
  +----------------------------------------------------+
                        |
                        v
                     ( End )
```

【FIG. 15】

【FIG. 16】

【FIG. 17】

【FIG. 18】

Device(100,200)

| Communication unit(110)<br>(e.g., 5G communication unit) | Control unit(120)<br>(e.g., processor(s)) |
|---|---|
| Communication circuit(112)<br>(e.g., processor(s),memory(s)) | Memory unit(130)<br>(e.g., RAM, storage) |
| Transceiver(s)(114)<br>(e.g., RF unit(s),antenna(s)) | Additional components(140)<br>(e.g., power unit/battery,<br>I/O unit,driving unit,<br>computing unit) |

【FIG. 19】

【FIG. 20】

## INTERNATIONAL SEARCH REPORT

| | International application No. |
|---|---|
| | **PCT/KR2022/013914** |

### A. CLASSIFICATION OF SUBJECT MATTER

**H04W 72/04**(2009.01)i; **H04W 72/02**(2009.01)i; **H04W 72/12**(2009.01)i; **H04L 1/18**(2006.01)i; **H04W 4/40**(2018.01)i; **H04W 92/18**(2009.01)i

According to International Patent Classification (IPC) or to both national classification and IPC

### B. FIELDS SEARCHED

Minimum documentation searched (classification system followed by classification symbols)

H04W 72/04(2009.01); H04W 28/02(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: Inter-UE Coordination Information, SOURCE ID, DESTINATION ID, unicast, groupcast, predefined ID

### C. DOCUMENTS CONSIDERED TO BE RELEVANT

| Category* | Citation of document, with indication, where appropriate, of the relevant passages | Relevant to claim No. |
|---|---|---|
| Y<br>A | LG ELECTRONICS. Discussion on inter-UE coordination for Mode 2 enhancements. R1-2107529, 3GPP TSG RAN WG1 Meeting #106-e, e-Meeting. 07 August 2021.<br>    See sections 2.3-2.4. | 1,8-14<br>2-7 |
| Y | FUJITSU. Considerations on Inter-UE Coordination for Mode 2 Enhancements. R1-2107038, 3GPP TSG RAN WG1 Meeting #106-e, e-Meeting. 06 August 2021.<br>    See section 2.1.2. | 1,8-14 |
| Y | INTEL CORPORATION. Design of Inter-UE Coordination Solutions for Sidelink. R1-2107610, 3GPP TSG RAN WG1 #106-e, e-Meeting. 07 August 2021.<br>    See sections 1-4. | 8-9 |
| A | PANASONIC. Inter-UE coordination for Mode 2 enhancements. R1-2107303, 3GPP TSG RAN WG1 #106-e, e-Meeting. 06 August 2021.<br>    See sections 2-3. | 1-14 |

☑ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 December 2022** | **22 December 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2022/013914** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2017-0188391 A1 (SAMSUNG ELECTRONICS CO., LTD.) 29 June 2017 (2017-06-29)<br>See paragraphs [0183]-[0191]; and figure 12. | 1-14 |

Form PCT/ISA/210 (second sheet) (July 2022)

**INTERNATIONAL SEARCH REPORT**
Information on patent family members

International application No.

**PCT/KR2022/013914**

| Patent document cited in search report | | | Publication date (day/month/year) | Patent family member(s) | | | Publication date (day/month/year) |
|---|---|---|---|---|---|---|---|
| US | 2017-0188391 | A1 | 29 June 2017 | EP | 3398388 | A1 | 07 November 2018 |
| | | | | EP | 3843491 | A1 | 30 June 2021 |
| | | | | KR | 10-2018-0089435 | A | 08 August 2018 |
| | | | | US | 10383147 | B2 | 13 August 2019 |
| | | | | WO | 2017-116108 | A1 | 06 July 2017 |

Form PCT/ISA/210 (patent family annex) (July 2022)